# EUROPEAN PATENT APPLICATION

(11) **EP 4 790 530 A1**
(43) Date of publication of application: **12.08.2026**
(21) Application number: 24884143.9
(22) Date of filing: 16.08.2024
(51) Int. Cl.: G06F 3/04817, G06F 3/0487, G06F 3/0484

(54) **INTERFACE DISPLAY METHOD AND RELATED DEVICE**

(30) Priority: 03.11.2023 CN 202311466259; 16.11.2023 CN 202311537367
(71) Applicant: Honor Device Co., Ltd., Shenzhen, Guangdong 518040 (CN)
(72) Inventor: CHEN, Jiazi, Shenzhen, Guangdong 518040 (CN)
(74) Representative: Goddar, Heinz J.
(86) International application number: PCT/CN2024/112858
(87) International publication number: WO 2025/092136

(57) **Abstract**

This application provides an interface display method and a related device, and relates to the field of communication technologies. The interface display method includes: When an electronic device is incapable of accessing a mobile communication network, a first window is displayed in response to a tap operation of a user on a first icon on a first page displayed by the electronic device, where the first window includes a first option for connecting to a satellite; and in response to a tap operation of the user on the first option, a communication connection is established with the satellite, and a service corresponding to the first icon is executed. In this application, when an electronic device cannot access a mobile communication network, and an attempt is made to contact the outside world via the electronic device, a user can be actively guided to operate the electronic device to establish a communication connection with a satellite, so that the electronic device can contact the outside world based on a satellite communication function, thereby improving device use experience of the user.

## Description

This application claims priority to Chinese Patent Application No. 202311466259.0, filed with the China National Intellectual Property Administration on November 3, 2023 and entitled "INTERFACE DISPLAY METHOD AND RELATED DEVICE", and priority to Chinese Patent Application No. 202311537367.2, filed with the China National Intellectual Property Administration on November 16, 2023 and entitled "INTERFACE DISPLAY METHOD AND RELATED DEVICE", which are incorporated herein by reference in their entireties.

### TECHNICAL FIELD

This application relates to the field of communication technologies, and in particular, to an interface display method and a related device.

### BACKGROUND

With development of terminal technologies, functions of electronic devices become increasingly rich, and the electronic devices may be configured with functions such as calling and messaging. In some emergency scenarios, users usually require contacting the outside world via electronic devices, for example, informing the other parties of positions of the users, to facilitate timely rescue operations.

For some individuals in remote wilderness areas (for example, deserts or forests) or at sea, the lack of proximity to operator base stations renders electronic devices incapable of contacting the outside world via operator's mobile communication networks. In such scenarios, dedicated satellite phones are usually required to contact the outside world.

Conventional satellite phones are bulky, inconvenient to carry, and prohibitively expensive. If an electronic device supports satellite communication functions (for example, satellite calling and satellite messaging), when a user encounters an emergency and no operator's mobile communication network is available, the user can contact the outside world by using the satellite communication functions of the electronic device.

Configuring an interface interaction manner corresponding to a satellite communication function in an electronic device so that a user uses a satellite calling function and/or a satellite messaging function by using the electronic device has become a major to-be-resolved problem.

### SUMMARY

In view of this, it is necessary to provide an interface display method, to resolve a problem in the existing technology that an electronic device does not have an interface interaction manner corresponding to a satellite communication function.

A first aspect of embodiments of this application discloses an interface display method, including: When an electronic device is incapable of accessing a mobile communication network, a first window is opened in response to a tap operation of a user on a first icon on a first page displayed by the electronic device, where the first window includes a first option for connecting to a satellite; and in response to a tap operation of the user on the first option, a communication connection is established with the satellite, and a service corresponding to the first icon is executed.

According to the foregoing technical solution, a service corresponding to the first icon may include a satellite calling service or a satellite messaging service, and the first icon on the first page may be a dialer icon on a dialer interface or a send button on a message sending interface. When the electronic device cannot access the mobile communication network, the electronic device may open, in response to the tap operation of the user on the first icon on the first page displayed by the electronic device, the first window for guiding the user to establish a connection between the electronic device and the satellite, and may further perform satellite calling or satellite messaging based on a satellite communication function after the electronic device successfully establishes a communication connection with the satellite. The electronic device may quickly use a satellite calling function and/or a satellite messaging function in response to a user operation, reducing operation complexity of placing a satellite call/sending a satellite message by the user, and improving use experience of the user.

In a possible implementation, the first page is a dialer interface. That a first window is opened in response to a tap operation of a user on a first icon on a first page displayed by the electronic device includes: In response to the tap operation of the user on the first icon on the dialer interface displayed by the electronic device, a call interface is displayed, and the first window is opened, where the first window overlaps a portion of the call interface.

According to the foregoing technical solution, when the electronic device cannot access a mobile communication network, after the user taps the first icon (a dialer icon) on the dialer interface, the electronic device may display the call interface, and may open the first window that is for guiding the user to establish a connection between the electronic device and the satellite. The first window overlaps the portion of the call interface. The user may tap the first option that is for connecting with the satellite and that is in the first window, so that the electronic device may attempt to establish the communication connection with the satellite. After the electronic device successfully establishes the communication connection with the satellite, the electronic device may conduct a satellite call with a called party based on the satellite communication function.

In a possible implementation, the call interface displays prompt information indicating estimated airtime supported by a remaining battery capacity of the electronic device.

According to the foregoing technical solution, the user usually uses the satellite communication function of the electronic device in an emergency scenario. In such a scenario, a battery capacity of the electronic device is limited. The prompt information indicating the estimated airtime supported by the remaining battery capacity of the electronic device is displayed on the call interface, so that the user can be prompted to pay attention to reserved power, properly planning airtime, and improving a possibility of successful rescue of the user in an emergency scenario.

In a possible implementation, when the remaining battery capacity of the electronic device is greater than a preset battery capacity, the prompt information indicating the estimated airtime supported by the remaining battery capacity of the electronic device is displayed on the call interface in a first display manner; and when the remaining battery capacity of the electronic device is less than or equal to the preset battery capacity, the prompt information indicating the estimated airtime supported by the remaining battery capacity of the electronic device is displayed on the call interface in a second display manner different from the first display manner.

According to the foregoing technical solution, the urgency for the user to plan airtime varies based on different remaining battery capacities. When the battery capacity is large or the battery capacity is small, the prompt information indicating the estimated airtime supported by the remaining battery capacity is output in different forms, so that the user can plan airtime by using different planning strategies based on different forms of prompt information. For example, the preset battery capacity is 20% battery capacity, the first display manner is that prompt information indicating satellite airtime supported by a current battery capacity is displayed once after the call interface is entered, and the prompt information disappears after being continuously displayed for preset duration, and the second display manner is that prompt information indicating satellite airtime supported by a current battery capacity is displayed by continuously flashing when the call interface is entered.

In a possible implementation, a first SIM card and a second SIM card are installed on the electronic device, and the dialer interface includes a first dialer icon corresponding to the first SIM card and a second dialer icon corresponding to the second SIM card; when the electronic device establishes a communication connection with the satellite based on the first SIM card and re-enters the dialer interface, the dialer interface displays only the first dialer icon corresponding to the first SIM card; and when the electronic device establishes a communication connection with the satellite based on the second SIM card and re-enters the dialer interface, the dialer interface displays only the second dialer icon corresponding to the second SIM card.

According to the foregoing technical solution, when the electronic device does not establish a communication connection with the satellite, and the first SIM card and the second SIM card are installed on the electronic device, the dialer interface may display the first dialer icon corresponding to the first SIM card and the second dialer icon corresponding to the second SIM card, so that the user can make a call by using the first SIM card or the second SIM card. When the electronic device establishes a communication connection with the satellite, and the first SIM card and the second SIM card are installed on the electronic device, the dialer interface may display only a dialer icon corresponding to a SIM card for establishing the communication connection with the satellite, so that the user can place a satellite call. Compared with a case in which a communication connection is established with the satellite, and two dialer icons are still displayed, this can avoid a case in which the user cannot initiate a satellite call by tapping the other dialer icon.

In a possible implementation, the first page is an message conversation interface. That a first window is opened in response to a tap operation of a user on a first icon on a first page displayed by the electronic device includes: In response to the tap operation of the user on the first icon on the message conversation interface displayed by the electronic device, the first window is opened, where the first window overlaps a portion of the message conversation interface.

According to the foregoing technical solution, when the electronic device cannot access the mobile communication network, after the user edits content of an message to be sent and taps the first icon (a send button) on the message conversation interface, the electronic device may open the first window that is for guiding the user to establish the connection between the electronic device and the satellite. The first window overlaps the portion of the message conversation interface. The user may tap the first option that is for connecting with the satellite and that is in the first window, so that the electronic device may attempt to establish the communication connection with the satellite. After the electronic device successfully establishes the communication connection with the satellite, the electronic device may send out the content of the message based on the satellite communication function.

In a possible implementation, that when an electronic device is incapable of accessing a mobile communication network, a first window is opened in response to a tap operation of a user on a first icon on a first page displayed by the electronic device includes: When the electronic device detects that the electronic device is located at an outdoor position and is incapable of accessing the mobile communication network, the first window is opened in response to the tap operation of the user on the first icon on the first page displayed by the electronic device.

According to the foregoing technical solution, there may be a case in which no operator's mobile communication network is available in an indoor environment (for example, an underground parking lot or a basement). In this case, due to blocking of satellite signals by buildings, an electronic device usually cannot establish a connection with a satellite, and rescue is usually not needed in this case. Therefore, in a process in which a user makes a call or sends an message, a premise that the user is actively guided to establish the connection between the electronic device and the satellite may be set to including it is detected that the electronic device is currently outdoors rather than indoors.

In a possible implementation, after the service corresponding to the first icon is executed, the interface display method further includes: A second window is opened, where the second window includes a second option for enabling a power saving mode; and the power saving mode is enabled in response to a tap operation of the user on the second option.

According to the foregoing technical solution, because a satellite call or a satellite message is usually used when a user contacts the outside world in an extreme environment, and a battery capacity of an electronic device is limited, to improve a rescue success possibility of the user, after detecting that a service (a satellite call is placed or a satellite message is sent) corresponding to the first icon is executed based on a satellite communication function, for example, after the satellite call is ended or sending of the satellite message is completed, the electronic device may automatically enable the second window that is for prompting the user whether to enable the power saving mode, and the user may tap the second option in the second window, to quickly enable the power saving mode.

In a possible implementation, that in response to a tap operation of the user on the first option, a communication connection is established with the satellite includes: A third window is opened in response to the tap operation of the user on the first option, where the third window includes an alignment pattern and an alignment area for displaying the alignment pattern; in response to an operation of adjusting a posture of the electronic device by the user, the alignment pattern is moved so that the alignment pattern is partially displayed in the alignment area or is entirely displayed in the alignment area; and the communication connection is established with the satellite when the alignment pattern is entirely displayed in the alignment area.

According to the foregoing technical solution, a status of alignment between the electronic device and the satellite is presented in a form of a motion effect, so that in a process of adjusting the posture of the electronic device, the user may intuitively determine, depending on whether the alignment pattern is entirely displayed in the alignment area, whether the electronic device is aligned with the satellite, so that the user can adjust the posture of the electronic device in a timely manner based on the alignment motion effect. After the alignment with the satellite is completed, the electronic device can attempt to establish the communication connection with the satellite.

In a possible implementation, that in response to an operation of adjusting a posture of the electronic device by the user, the alignment pattern is moved so that the alignment pattern is partially displayed in the alignment area or is entirely displayed in the alignment area includes: In response to an operation of tilting the electronic device upward or downward by the user, the alignment pattern is controlled to move upward to be exposed in the alignment area, or the alignment pattern is controlled to move downward to disappear from the alignment area; or in response to an operation of tilting the electronic device rightward or leftward by the user, the alignment pattern is controlled to move rightward to be exposed in the alignment area, or the alignment pattern is controlled to move leftward to disappear from the alignment area.

According to the foregoing technical solution, satellite alignment usually includes pitch angle alignment and left-right roll angle alignment. Pitch angle alignment and left-right roll angle alignment of the electronic device and the satellite are presented by using different motion effect forms, so that in a process of adjusting the posture of the electronic device, the user may intuitively determine, depending on whether an alignment pattern is entirely displayed in an alignment area, whether pitch angle alignment and left-right roll angle alignment of the electronic device and the satellite are completed. Pitch angle alignment may be implemented based on an operation of the user tilting the electronic device upward or tilting the electronic device downward. With the operation of the user tilting the electronic device upward or tilting the electronic device downward, the alignment pattern may be moved upward to be exposed in the alignment area, or the alignment pattern is moved downward to disappear from the alignment area. When the alignment pattern is entirely displayed in the alignment area, it indicates that pitch angle alignment with the satellite is completed. Left-right roll angle alignment may be implemented based on an operation of the user tilting the electronic device rightward or leftward. With the operation of the user tilting the electronic device rightward or leftward, the alignment pattern may be moved rightward to be exposed in the alignment area, or the alignment pattern is moved leftward to disappear from the alignment area. When the alignment pattern is entirely displayed in the alignment area, it indicates that left-right roll angle alignment with the satellite is completed.

In a possible implementation, the interface display method further includes: The third window is collapsed into a preset display form in response to a swipe operation of the user on the third window, where the preset display form is any one of a heads-up notification, a floating window, and a dynamic capsule; or the third window is collapsed into the preset display form after preset duration of establishing the communication connection with the satellite.

According to the foregoing technical solution, the third window may be a satellite connection status interface. The third window is collapsed into any one of the heads-up notification, the floating window, and the dynamic capsule that are smaller, visual impact or operational impact on the user caused by blocking content of a lower layer interface by the third window can be reduced.

In a possible implementation, the third window overlaps a portion of a second page, and the interface display method further includes: In response to a tap operation of the user on the second page, the third window that is collapsed into the preset display form is moved from a first position to a second position different from the first position.

According to the foregoing technical solution, when the user performs an operation on a lower layer interface of the third window, the third window that is collapsed into the preset display form is moved from the first position to the second position different from the first position, so that visual impact or operational impact on the user caused by blocking the content of the lower layer interface by the third window collapsed into the preset display form can be further reduced. For example, the lower layer interface of the third window is a satellite phone dialer interface, and a default display position of the third window collapsed into the preset display form is an upper section of the satellite phone dialer interface. When the user dials using a dialing keypad area, the third window collapsed into the preset display form may be automatically moved to an area between the dialing keypad area and a number display area, to avoid blocking the number display area and improve dialing experience of the user.

According to a second aspect, an embodiment of this application provides an interface display method, applied to an electronic device. The method includes: In response to a tap operation of a user on a first page displayed by the electronic device, a first window is moved from a first position to a second position different from the first position, where the first window is for displaying a status of a connection between the electronic device and a satellite, the first window overlaps a portion of the first page, the first window is displayed on the first page in a preset display form, and the preset display form is any one of a heads-up notification, a floating window, and a dynamic capsule.

According to the foregoing technical solution, the first window may be a satellite connection status interface. When a communication connection is established between the electronic device and the satellite, and the satellite connection status interface is collapsed into any one of the heads-up notification, the floating window, and the dynamic capsule, for the first page displayed under the first window, an active avoidance rule for the first window may be correspondingly configured, to reduce visual impact or operational impact caused when the first window is displayed on the first page and the user performs an operation on the first page.

In a possible implementation, a first SIM card and a second SIM card are installed on the electronic device, and the first page is a dialer interface; when the electronic device does not establish a communication connection with the satellite, the dialer interface includes a first dialer icon corresponding to the first SIM card and a second dialer icon corresponding to the second SIM card; when the electronic device establishes a communication connection with the satellite based on the first SIM card, the dialer interface displays only the first dialer icon corresponding to the first SIM card; and when the electronic device establishes a communication connection with the satellite based on the second SIM card, the dialer interface displays only the second dialer icon corresponding to the second SIM card.

According to the foregoing technical solution, when the electronic device does not establish a communication connection with the satellite, and the first SIM card and the second SIM card are installed on the electronic device, the dialer interface may display the first dialer icon corresponding to the first SIM card and the second dialer icon corresponding to the second SIM card, so that the user can make a call by using the first SIM card or the second SIM card. When the electronic device establishes a communication connection with the satellite, and the first SIM card and the second SIM card are installed on the electronic device, the dialer interface may display only a dialer icon corresponding to a SIM card for establishing the communication connection with the satellite, so that the user can place a satellite call. Compared with a case in which a communication connection is established with the satellite, and two dialer icons are still displayed, this can avoid a case in which the user cannot initiate a satellite call by tapping a dialer icon corresponding to the other SIM card.

In a possible implementation, the first page is a dialer interface. That in response to a tap operation of a user on a first page displayed by the electronic device, a first window is moved from a first position to a second position different from the first position includes: The first window is moved from the first position to the second position in response to a tap operation of the user on a dialing keypad area on the dialer interface, where the first position is a number display area on the dialer interface, and the second position is an area between the number display area and the dialing keypad area on the dialer interface.

According to the foregoing technical solution, the first page is a satellite phone dialer interface, and a default display position of the first window that is collapsed into the preset display form is usually an upper section of the satellite phone dialer interface. When the user dials using a dialing keypad area, the first window collapsed into the preset display form may be automatically moved to an area between the dialing keypad area and a number display area, to avoid blocking the number display area and improve dialing experience of the user.

In a possible implementation, the dialing keypad area includes a dialer icon, and the interface display method further includes: A call interface is displayed in response to a tap operation of the user on the dialer icon, where the call interface displays prompt information indicating estimated airtime supported by a remaining battery capacity of the electronic device.

According to the foregoing technical solution, the user usually uses the satellite communication function of the electronic device in an emergency scenario. In such a scenario, a battery capacity of the electronic device is limited. The prompt information indicating the estimated airtime supported by the remaining battery capacity of the electronic device is displayed on the call interface, so that the user can be prompted to pay attention to reserved power, properly planning airtime, and improving a possibility of successful rescue of the user in an emergency scenario.

In a possible implementation, the interface display method further includes: A second window is opened when a call ends, where the second window includes an option for enabling a power saving mode; and the power saving mode is enabled in response to a tap operation of the user on the option.

According to the foregoing technical solution, because a satellite call or a satellite message is usually used when a user contacts the outside world in an extreme environment, and a battery capacity of an electronic device is limited, to improve a rescue success possibility of the user, after detecting that a satellite call is ended, the electronic device may automatically enable the second window that is for prompting the user whether to enable the power saving mode, and the user may tap the second option in the second window, to quickly enable the power saving mode.

In a possible implementation, before that in response to a tap operation of a user on a first page displayed by the electronic device, a first window is moved from a first position to a second position different from the first position, the interface display method further includes: When an alignment pattern and an alignment area for displaying the alignment pattern are displayed on the first window, in response to an operation of adjusting a posture of the electronic device by the user, the alignment pattern is moved so that the alignment pattern is partially displayed in the alignment area or is entirely displayed in the alignment area; and the communication connection is established with the satellite when the alignment pattern is entirely displayed in the alignment area.

According to the foregoing technical solution, a status of alignment between the electronic device and the satellite is presented in a form of a motion effect, so that in a process of adjusting the posture of the electronic device, the user may intuitively determine, depending on whether the alignment pattern is entirely displayed in the alignment area, whether the electronic device is aligned with the satellite, so that the user can adjust the posture of the electronic device in a timely manner based on the alignment motion effect. After the alignment with the satellite is completed, the electronic device can attempt to establish the communication connection with the satellite.

According to a third aspect, an embodiment of this application provides a computer-readable storage medium, including computer instructions. When the computer instructions are run on an electronic device, the electronic device is enabled to perform the interface display method according to the first aspect or the second aspect.

According to a fourth aspect, an embodiment of this application provides an electronic device. The electronic device includes a processor and a memory, the memory is configured to store instructions, and the processor is configured to invoke the instructions in the memory, so that the electronic device performs the interface display method according to the first aspect or the second aspect.

According to a fifth aspect, an apparatus is provided. The apparatus has a function of implementing behavior of the electronic device in the method provided in the first aspect or the second aspect. The function may be implemented by hardware, or may be implemented by hardware by executing corresponding software. The hardware or the software includes one or more modules corresponding to the function.

It may be understood that the computer-readable storage medium according to the third aspect, the electronic device according to the fourth aspect, and the apparatus according to the fifth aspect all correspond to the method according to the first aspect or the second aspect. Therefore, for beneficial effects that can be achieved by the electronic device, the computer-readable storage medium, and the apparatus, refer to the beneficial effects in the corresponding method provided above. Details are not described herein again.

### BRIEF DESCRIPTION OF DRAWINGS

FIG. 1 is a schematic structural diagram of an electronic device according to an embodiment of this application;
FIG. 2 is a schematic diagram of a software structure of an electronic device according to an embodiment of this application;
FIG. 3A is a schematic flowchart of attempting to use a satellite communication function by an electronic device according to an embodiment of this application;
FIG. 3B is a schematic flowchart of attempting to use a satellite communication function by an electronic device according to another embodiment of this application;
FIG. 3C is a schematic flowchart of attempting to use a satellite communication function by an electronic device according to still another embodiment of this application;
FIG. 4 is a schematic flowchart of performing a calling service or a messaging service by an electronic device based on a satellite communication function according to an embodiment of this application;
FIG. 5A and FIG. 5B are schematic diagrams of an operation procedure of using a satellite communication function of an electronic device according to an embodiment of this application;
FIG. 6A to FIG. 6F are schematic diagrams of an operation procedure of enabling a satellite communication function by an electronic device according to an embodiment of this application;
FIG. 7A to FIG. 7D are schematic diagrams of an operation procedure of establishing a connection with a satellite by an electronic device according to an embodiment of this application;
FIG. 8A and FIG. 8B are schematic diagrams of an operation procedure of placing a satellite call by an electronic device according to an embodiment of this application;
FIG. 8C and FIG. 8D (1) to FIG. 8D(4) are schematic diagrams of an operation procedure of sending a satellite message by an electronic device according to an embodiment of this application;
FIG. 8E is a schematic diagram of a display effect of a satellite connection status interface collapsed into a floating window according to an embodiment of this application;
FIG. 8F is a schematic diagram of a display effect of a satellite connection status interface collapsed into a dynamic capsule according to an embodiment of this application;
FIG. 9A is a schematic diagram of a dialer interface and a message conversation interface when an electronic device cannot access a mobile communication network and is not connected to a satellite according to an embodiment of this application;
FIG. 9B is a schematic diagram of a dialer interface and a message conversation interface when an electronic device cannot access a mobile communication network and is connected to a satellite according to an embodiment of this application;
FIG. 10A to FIG. 10D are diagrams of an operation procedure of guiding a user to enable a satellite communication function by an electronic device according to an embodiment of this application;
FIG. 11 is a diagram of an operation procedure of guiding a user to enable a power saving mode by an electronic device according to an embodiment of this application;
FIG. 12 is a schematic diagram of an operation procedure of disabling a satellite communication function by an electronic device according to an embodiment of this application;
FIG. 13 is a schematic flowchart of an interface display method according to an embodiment of this application;
FIG. 14 is a schematic flowchart of an interface display method according to another embodiment of this application; and
FIG. 15 is a schematic structural diagram of an interface display apparatus according to an embodiment of this application.

### DESCRIPTION OF EMBODIMENTS

For ease of understanding, some concepts related to embodiments of this application are exemplified for reference.

It should be noted that, terms "first" and "second" in embodiments of this application are merely intended for a purpose of description, and shall not be understood as an indication or implication of relative importance or implicit indication of a quantity of indicated technical features. Therefore, a feature limited by "first" or "second" may explicitly or implicitly include one or more features. In descriptions of embodiments of the present application, a term such as "example" or "for example" is used for representing giving an instance, illustration, or explanation. Any embodiment or design scheme described as an "example" or "for example" in embodiments of this application should not be explained as being more preferred or having more advantages than another embodiment or design scheme. Exactly, use of the term "example", "for example", or the like is intended to present a related concept in a specific manner.

Unless otherwise defined, all technical and scientific terms used herein have same meanings as those commonly understood by persons skilled in the art of this application. The terms used in this specification of this application are merely for the purpose of describing specific embodiments, and are not intended to limit this application. It should be understood that in this application, "/" represents "or" unless otherwise specified. For example, A/B may represent A or B. In this application, "and/or" describes only an association relationship for describing associated objects and represents that three relationships may exist. For example, A and/or B may represent the following three cases: Only A exists, both A and B exist, and only B exists. "At least one" means one or more. "A plurality of" means two or more. For example, at least one of a, b, or c may represent the following seven cases: a, b, c, a and b, a and c, b and c, or a, b, and c.

With the development of terminal technologies, a satellite communication function may be integrated on an electronic device. In this way, when no operator's mobile communication network is available, the electronic device may place a satellite call with another electronic device or send a satellite message, based on a satellite communication function, so that a user can contact the outside world in an extreme environment (for example, a desert, a forest, or sea that is away from people).

After the satellite communication function is integrated on the electronic device, a corresponding human computer interaction interface (which may also be referred to as a user interface) further needs to be provided, so that the user places a satellite call and/or sends a satellite message on the electronic device.

To resolve the foregoing technical problem, embodiments of this application provide an interface display method, to resolve an existing problem that an electronic device lacks a user interface corresponding to a satellite communication function.

The interface display method in embodiments of this application may be applied to various electronic devices that support a satellite communication function. The electronic device may be an electronic device such as a mobile phone, a tablet computer (portable android device, Pad), a wearable device (for example, a smart watch), or an in-vehicle device. For example, the electronic device may be a device with iOS^{®}, Android^{®} (Android^{®}), Windows Mobile^{®}, MagicOS^{®}, or another operating system. This is not limited in this application. In embodiments of this application, an example in which the electronic device is a mobile phone is used for description.

A user interface (User Interface, UI) in embodiments of this application is a medium interface for interaction and information exchange between an application program or an operating system and a user, and may implement conversion between an internal form of information and a form (for example, a visual operating environment) that can be accepted by the user. The user interface terminology may refer to text included in the user interface, where a text language may be Chinese, English, Japanese, Korean, Arabic, French, Russian, German, Portuguese, or the like. A user interface of the application program may use source code compiled by using a specific computer language such as JAVA or an extensible markup language (extensible markup language, XML). The interface source code is parsed and rendered on the electronic device, and is finally presented as content that can be identified by the user, for example, a control such as an image, text, or a button. The control (control) is a basic element of the user interface. Typical controls include a button (button), a widget (widget), a toolbar (toolbar), a menu bar (menu bar), a text box (text box), a scrollbar (scrollbar), an image (image), and text (text). An attribute and content of a control on an interface are defined by using a tag or a node. For example, in XML, a control included in an interface is specified by using a node such as <Textview>, <ImgView>, or <VideoView>. One node corresponds to one control or attribute in an interface. Through parsing and rendering, the node is presented as content visible to a user. In addition, interfaces of many application programs, for example, a hybrid application (hybrid application), usually further include webpages. The webpage, also referred to as a page, may be understood as a special control embedded in an application program interface. The webpage is source code compiled by using a specific computer language, such as hypertext markup language (hyper text markup language, HTML), cascading style sheets (cascading style sheets, CSS), and JavaScript (JavaScript, JS). The webpage source code may be loaded by a browser or a webpage display component having a function similar to that of the browser, and displayed as user-identifiable content. Specific content included in the webpage is also defined by using a tag or a node in the webpage source code. For example, in HTML, elements and attributes of a webpage are defined by using <p>, <img>, <video>, and <canvas>. In embodiments of this application, interfaces such as a display interface and an application program interface may all be referred to as a user interface.

A common representation form of the user interface is a graphical user interface (graphic user interface, GUI), which refers to a user interface related to a computer operation and displayed in a graphical manner. The GUI may be an interface element, such as an icon, a window, or a control, displayed on a display of an electronic device.

In some embodiments, one or more APPs (Application) may be installed on the electronic device. The APP may be referred to as an application for short, and is a software program that can implement one or more specific functions, such as a call application, an message application, an instant chat and messaging application, a video application, a photographing application, a home screen application, or an exercise health application. Applications mentioned in the following embodiments may be factory-installed applications on the electronic device, or third-party applications obtained by users through network downloads or from other electronic devices during usage.

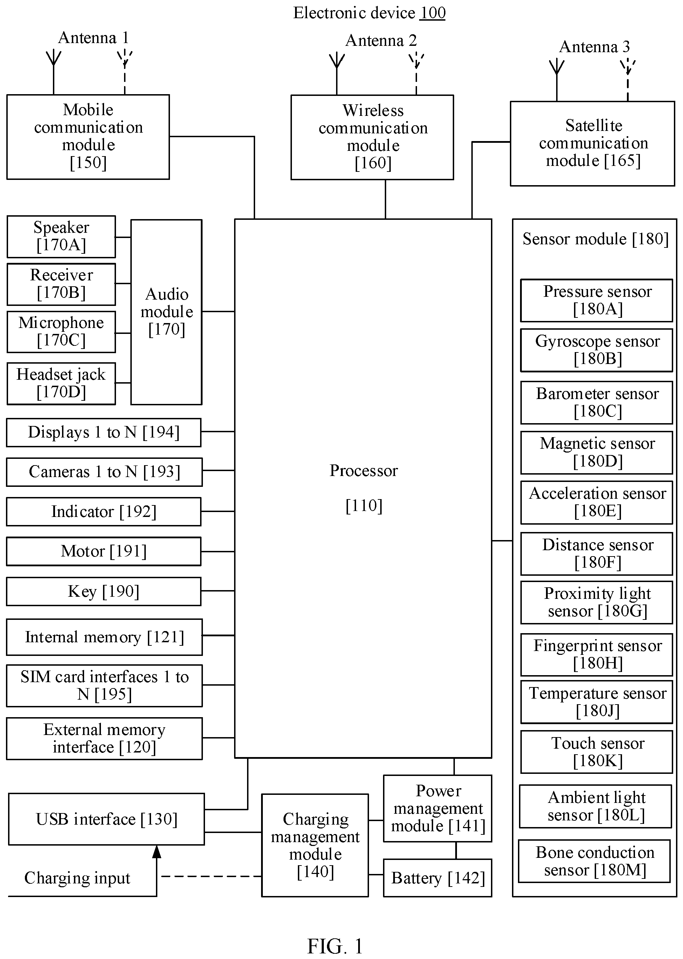

FIG. 1 is a schematic diagram of a hardware structure of an electronic device according to an embodiment of this application.

As shown in FIG. 1, an electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, an antenna 3, a mobile communication module 150, a wireless communication module 160, a satellite communication module 165, an audio module 170, a speaker 170A, a receiver 170B, a microphone 170C, a headset jack 170D, a sensor module 180, a key 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, a proximity light sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, some components may be combined, some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store an instruction or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral device such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display screen 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device 100 such as an AR device.

It may be understood that a schematic interface connection relationship between the modules in embodiments of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device 100 through the power management module 141 while charging the battery 142.

The power management module 141 is configured to connect to the battery 142, the charging management module 140, and the processor 110. The power management module 141 receives input of the battery 142 and/or the charging management module 140, to supply power to the processor 110, the internal memory 121, the display screen 194, the camera 193, the wireless communication module 160, and the like. The power management module 141 may be further configured to monitor parameters such as a battery capacity, a quantity of battery cycles, and a battery health status (leakage and impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1, the antenna 2, and the antenna 3 are configured to transmit and receive electromagnetic wave signals. Each antenna in the electronic device 100 may be configured to cover one or more communication frequency bands. Different antennas may be further reused, to improve antenna utilization. For example, the antenna 1 may be reused as a diversity antenna in a wireless local area network. In some other embodiments, the antenna may be used in combination with a tuning switch.

The mobile communication module 150 may provide a wireless communication solution that is applied to the electronic device 100 and that includes 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The satellite communication module 165 may provide a solution for implementing satellite communication on the electronic device 100, for example, a solution for implementing satellite communication with a Tiantong satellite. The satellite communication module 165 may be one or more components integrating at least one communication processor module. The satellite communication module 165 receives an electromagnetic wave by the antenna 3, performs frequency modulation and filtering processing on an electromagnetic wave signal, and sends a processed signal to the processor 110. The satellite communication module 165 may further receive a to-be-sent signal from the processor 110, perform frequency modulation and amplification on the signal, and convert the signal into an electromagnetic wave for radiation through the antenna 3.

In some embodiments, in the electronic device 100, the antenna 1 is coupled to the mobile communication module 150, the antenna 2 is coupled to the wireless communication module 160, and the antenna 3 is coupled to the satellite communication module 165, so that the electronic device 100 can communicate with another device by using a wireless communication technology, an operator's mobile communication network, and a satellite communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a Miniled, a MicroLed, a Micro-oled, a quantum dot light-emitting diode (quantum dot light emitting diode, QLED), or the like. In some embodiments, the electronic device 100 may include one or N displays 194, where N is a positive integer greater than 1. The display 194 in this embodiment of this application may be a touchscreen. In other words, the touch sensor 180K is integrated in the display 194.

The electronic device 100 may implement a photographing function through the camera 193, the ISP, the video codec, the GPU, the display 194, the application processor and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The lightsensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG) 1, MPEG2, MPEG3, and MPEG4.

The NPU is a neural-network (neural-network, NN) computing processor. The NPU quickly processes input information based on a structure of a biological neural network, for example, based on a transfer mode between human brain neurons; and may further continuously perform self-learning. Applications such as intelligent cognition of the electronic device 100 may be implemented through the NPU, for example, image recognition, facial recognition, speech recognition, and text understanding.

The internal memory 121 may include one or more random access memories (random access memory, RAM), and one or more non-volatile memories (non-volatile memory, NVM).

The random access memory may include a static random-access memory (static random-access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a fifth-generation DDR SDRAM usually referred to as a DDR5 SDRAM), and the like.

The non-volatile memory may include a disk storage device and a flash memory (flash memory).

According to an operating principle, the flash memory may be classified into NOR FLASH, NAND FLASH, 3D NAND FLASH, and the like. According to potential orders of memory cells, the flash memory may be classified into a single-level cell (single-level cell, SLC), a multi-level cell (multi-level cell, MLC), a triple-level cell (triple-level cell, TLC), a quad-level cell (quad-level cell, QLC), and the like. According to a storage specification, the flash memory may be classified into a universal flash storage (English: universal flash storage, UFS), an embedded multimedia card (embedded multi media Card, eMMC), and the like.

The random access memory may be directly read and written by the processor 110, and may be configured to store executable programs (for example, machine instructions) of an operating system or other running programs, or may be configured to store data of users and application programs.

The non-volatile memory may also store executable programs, data of users and applications, and the like, and may be loaded into the random access memory in advance for the processor 110 to perform direct reading and writing.

The external memory interface 120 may be configured to connect to an external non-volatile memory, to expand a storage capability of the electronic device 100. The external non-volatile memory communicates with the processor 110 through the external memory interface 120, to implement a data storage function. For example, a file such as music or a video is stored in the external non-volatile memory.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110. The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be a USB interface 130, or may be a 3.5 mm open mobile electronic device 100 platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch position based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on a message application icon, an instruction for viewing a message is performed. When a touch operation whose touch operation intensity is greater than or equal to the first pressure threshold is performed on the message application icon, an instruction for creating a new message is performed.

The gyroscope sensor 180B may be configured to determine a moving posture of the electronic device 100. In some embodiments, an angular velocity of the electronic device 100 around three axes (that is, x, y, and z axes) may be determined through the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The barometric pressure sensor 180C is configured to measure barometric pressure. In some embodiments, the electronic device 100 calculates an altitude through an air pressure value measured by the air pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a clamshell phone, the electronic device 100 may detect opening and closing of a flip cover according to the magnetic sensor 180D. Further, a feature such as automatic unlocking of the flip cover is set based on a detected opening or closing state of the leather case or a detected opening or closing state of the flip cover.

The acceleration sensor 180E may detect magnitudes of accelerations of the electronic device 100 in various directions (usually on three axes). When the electronic device 100 is still, a magnitude and a direction of gravity may be detected. The acceleration sensor may be further configured to recognize a posture of the electronic device 100, and is applied to applications such as switchover between landscape and portrait modes and a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The proximity light sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the proximity light sensor 180G, that the user holds the electronic device 100 close to an ear for a call, to automatically turn off a screen for power saving. The proximity light sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the proximity light sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is lower than another threshold, the electronic device 100 heats the battery 142, to avoid an abnormal shutdown of the electronic device 100 caused by a low temperature. In some other embodiments, when the temperature is lower than still another threshold, the electronic device 100 boosts an output voltage of the battery 142 to prevent abnormal shutdown caused by a low temperature.

The touch sensor 180K is alternatively referred to as a "touch device". The touch sensor 180K may be disposed on the display 194, and the touch sensor 180K and the display 194 constitute a touchscreen, which is also referred to as a "touchscreen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may also be disposed on a surface of the electronic device 100 at a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also come into contact with a human pulse to receive a blood pressure beating signal. In some embodiments, the bone conduction sensor 180M may alternatively be disposed in a headset, to form a bone conduction headset. The audio module 170 may parse out a voice signal based on the vibration signal of the vibration bone of the vocal-cord part that is obtained by the bone conduction sensor 180M, to implement a voice function. The application processor may parse heart rate information based on the blood pressure beating signal obtained by the bone conduction sensor 180M, to implement a heart rate detection function.

The key 190 includes a power-on key, a volume key, and the like. The key 190 may be a mechanical button, or may be a touch key. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. For touch operations performed in different regions of the display 194, the motor 191 may also correspond to different vibration feedback effects. Different application scenarios (for example, a time reminder, information receiving, an alarm clock, and a game) may also correspond to different vibration feedback effects. The touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or of different types. The SIM card interface 195 is further compatible with different types of SIM cards. The SIM card interface 195 may also be compatible with an external storage card. The electronic device 100 interacts with a network through the SIM card, to implement functions such as making/answering a call and data communication. In some embodiments, the electronic device 100 uses an eSIM, namely, an embedded SIM card. The eSIM card may be embedded into the electronic device 100, and cannot be separated from the electronic device 100.

A software system of the electronic device 100 may use a layered architecture, an event-driven architecture, a microkernel architecture, a microservice architecture, or a cloud architecture. In embodiments of this application, an Android system with a layered architecture is used as an example to illustrate a software structure of the electronic device 100.

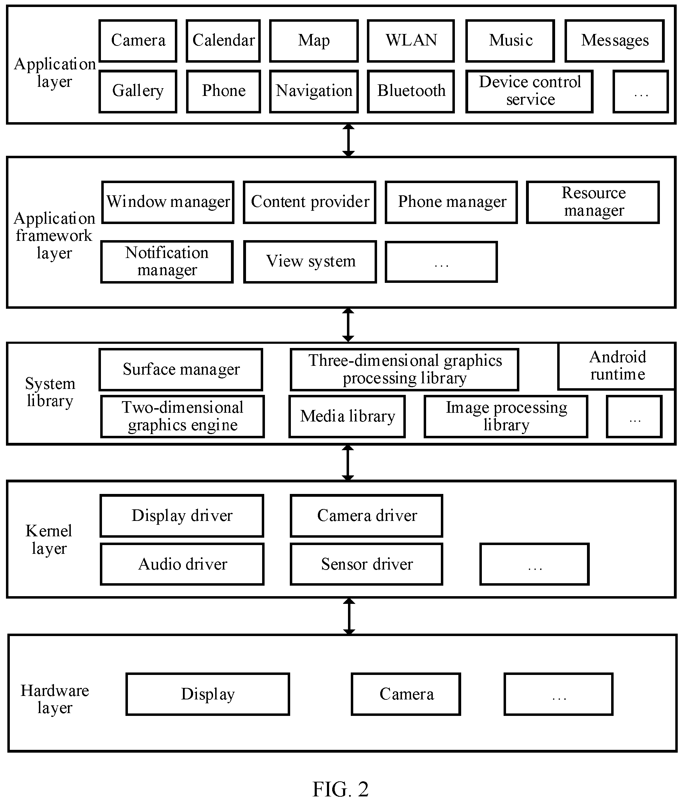

FIG. 2 is a block diagram of a software structure of the electronic device according to an embodiment of this application.

In the layered architecture, the software structure is divided into several layers, and each layer has a clear role and task. The layers communicate with each other through a software interface. In some embodiments, the Android system is divided into four layers, namely, an application layer, an application framework layer, an Android runtime (Android runtime), a system library, and a kernel layer from top to bottom.

The application layer may include a series of application packages.

As shown in FIG. 2, the application packages may include applications such as Battery Management, Camera, Gallery, Calendar, Phone, Map, Navigation, Music, Videos, and Messages.

The application framework layer provides an application programming interface (application programming interface, API) and a programming framework for an application at the application layer. The application framework layer includes some predefined functions.

As shown in FIG. 2, the application framework layer may include a window manager, an input manager InputManager, a sensor manager SensorManager, a phone manager, a resource manager, a notification manager, and the like.

The input manager may be configured to monitor an input event of a user, for example, a tap event or a swipe event performed by a finger of the user on the display 193 of the electronic device 100. By monitoring the input event, the electronic device 100 may determine whether the electronic device is being used.

The sensor manager is configured to monitor data, such as motion sensor data, proximity light sensor data, and temperature sensor data, returned by sensors in the electronic device. Based on the data returned by the sensors, the electronic device can determine whether the electronic device shakes, whether the display 193 is obscured, or the like.

The Android runtime includes a kernel library and a virtual machine. The Android runtime is responsible for scheduling and managing of the Android system.

The kernel library includes two parts: a function that needs to be invoked in Java language and a kernel library of Android.

The application layer and the application framework layer are run in the virtual machine. The virtual machine executes Java files of the application layer and the application framework layer as binary files. The virtual machine is configured to perform functions such as life cycle management, stack management, thread management, security and exception management, and garbage collection of an object.

The system library may include a plurality of function modules, for example, a surface manager (surface manager), a media library (media libraries), a three-dimensional graphics processing library (for example, openGL ES), and a 2D graphics engine (for example, an SGL).

The surface manager is configured to manage a display subsystem of the, and provide fusion of 2D and 3D layers for a plurality of application programs.

The media library supports playing and recording in a plurality of commonly used audio and video formats, static image files, and the like. The media library may support a plurality of audio and video encoding formats, for example, MPEG4, H.264, MP3, AAC, AMR, JPG, and PNG.

The three-dimensional graphics processing library is configured to implement three-dimensional graphics drawing, image rendering, synthesis, layer processing, and the like.

The 2D graphics engine is a drawing engine for 2D drawing.

The kernel layer is a layer between hardware and software. The kernel layer includes at least a display driver, a camera driver, an audio driver, and a sensor driver. The hardware layer may include a display, a camera, a sensor, and the like.

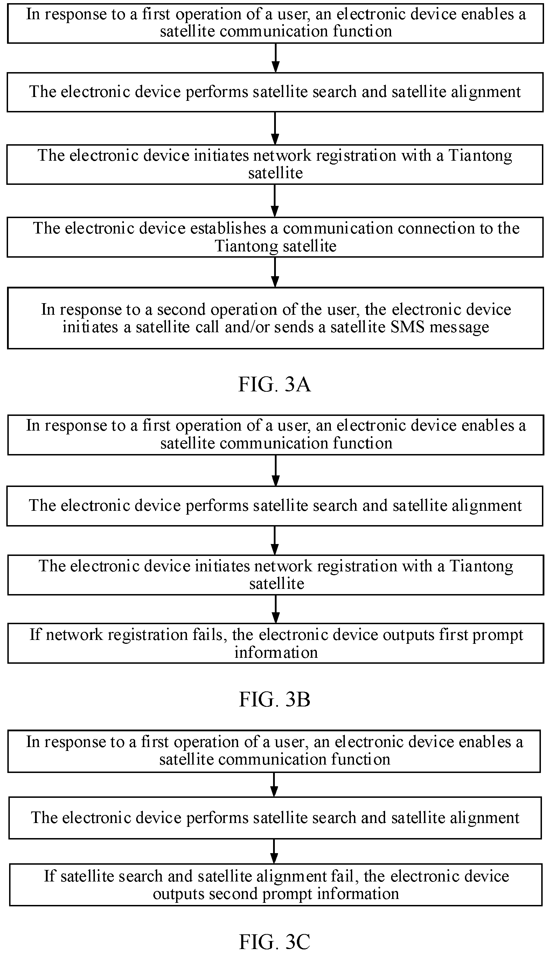

As shown in FIG. 3A, for a SIM card installed on an electronic device, if an operator to which the SIM card belongs operates a satellite communication service, and a satellite communication service is activated for the SIM card, the electronic device may normally use a satellite communication function based on the SIM card. Specifically, a procedure in which the electronic device attempts to use the satellite communication function may include the following steps.
(i) In response to a first operation of a user, the electronic device enables the satellite communication function.
   For example, a setting interface of the electronic device includes a "Satellite network" option, and the electronic device may enable the satellite communication function in response to the first operation of the user on the "Satellite network" option.
(ii) The electronic device performs satellite search and satellite alignment.
   After the electronic device enables the satellite communication function, the electronic device may automatically perform satellite search and satellite alignment (searching for a satellite and aligning with the satellite). To implement the satellite communication service, the operator to which the SIM card belongs deploys a plurality of mobile communication satellites in a geosynchronous orbit. The electronic device requests to establish communication connections with the mobile communication satellites through satellite search and satellite alignment. An example in which the mobile communication satellite is a Tiantong satellite is used. The electronic device performs satellite search and satellite alignment, and requests to establish a communication connection with the Tiantong satellite.
(iii) The electronic device initiates network registration with the Tiantong satellite.
   After the electronic device finds the Tiantong satellite and completes alignment with the Tiantong satellite, the electronic device may initiate network registration with the Tiantong satellite. If a satellite communication service is activated on the SIM card installed on the electronic device, the electronic device may successfully perform network registration with the Tiantong satellite.
(iv) The electronic device establishes a communication connection with the Tiantong satellite.
   After the electronic device successfully performs network registration with the Tiantong satellite, the electronic device establishes the communication connection with the Tiantong satellite, that is, the electronic device has successfully connected to the Tiantong satellite.
(v) In response to a second operation of the user, the electronic device initiates a satellite call and/or sends a satellite message.
   After the electronic device establishes the communication connection with the Tiantong satellite, the user may place a satellite call with another electronic device or send a satellite message by using the satellite communication function of the electronic device, to contact the outside world when no operator's mobile communication network is available. For example, the electronic device may provide a satellite call dialing keypad on a dialer interface, and initiate a satellite call in response to the second operation of the user on the satellite call dialing keypad, or the electronic device may send a satellite message in response to the second operation of the user on a messaging interface.

As shown in FIG. 3B, if an operator to which a SIM card belongs operates a satellite communication service, but the SIM card installed on an electronic device has not activated the satellite communication service, the electronic device cannot use a satellite communication function based on the SIM card. Specifically, a procedure in which the electronic device attempts to use the satellite communication function may include the following steps.
(i) In response to a first operation of a user, the electronic device enables the satellite communication function.
(ii) The electronic device performs satellite search and satellite alignment.
(iii) The electronic device initiates network registration with a Tiantong satellite.
(iv) If network registration fails, the electronic device outputs first prompt information.

Because no satellite communication service is activated for the SIM card installed on the electronic device, the electronic device cannot perform network registration with the Tiantong satellite, and the electronic device cannot be connected to the Tiantong satellite. The electronic device may output the first prompt information in a form of a pop-up dialog box. For example, the first prompt information is "No satellite communication service is activated for the SIM card".

As shown in FIG. 3C, if an operator to which a SIM card belongs does not operate a satellite communication service, an electronic device cannot use a satellite communication function based on the SIM card. Specifically, a procedure in which the electronic device attempts to use the satellite communication function may include the following steps.
(i) In response to a first operation of a user, the electronic device enables the satellite communication function.
(ii) The electronic device performs satellite search and satellite alignment.
(iii) If satellite search and satellite alignment fail, the electronic device outputs second prompt information.

Because the operator to which the SIM card belongs does not operate a satellite communication service, the electronic device cannot complete satellite search and satellite alignment. The electronic device may output the second prompt information in a form of a pop-up dialog box. For example, the second prompt information is "No SIM card supporting a satellite communication service is inserted" or "No SIM card of an XX operator is inserted".

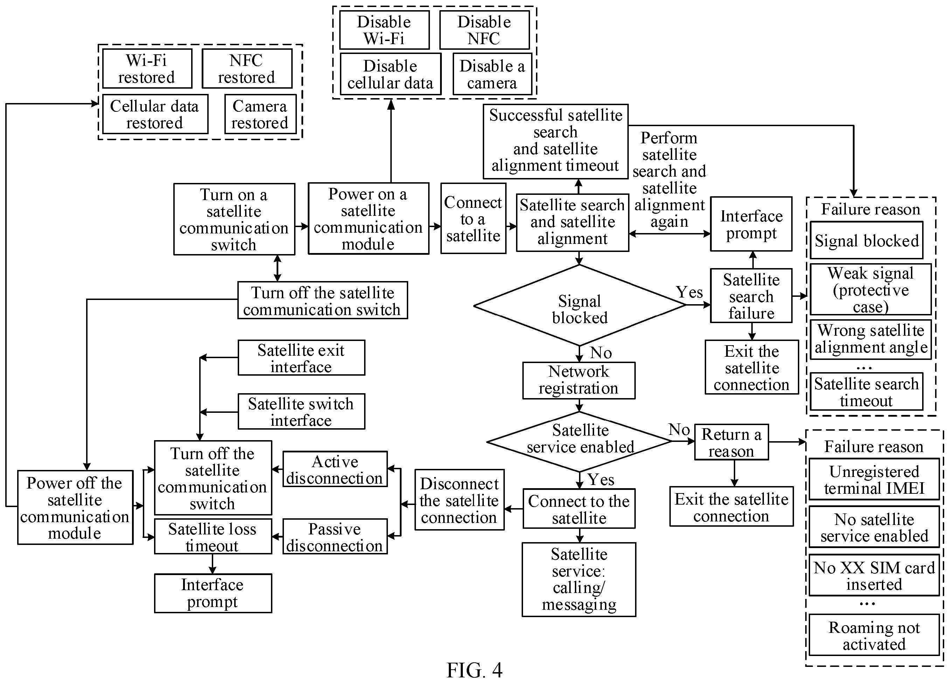

Refer to FIG. 4. A procedure of using a satellite communication function by an electronic device is described in detail by using an example in which an operator to which a SIM card installed on the electronic device belongs operates a satellite communication service and a satellite corresponding to the satellite communication service is a Tiantong satellite.
(1) Turn on a satellite communication switch, to enable the satellite communication function.

A setting interface of the electronic device may include a "Satellite network" option, and after a user taps the "Satellite network" option, an enabling interface of the satellite communication function may be entered. An "Enable" control for the satellite communication function may be set on the enabling interface of the satellite communication function, and the user may enable the satellite communication function by tapping the "Enable" control.

In some embodiments, the user may alternatively enable the satellite communication function by using a "Satellite network" APP icon displayed on a home screen or a "Satellite network" icon or option displayed in a control center.

(2) A satellite communication module is powered on, to attempt to connect to a Tiantong satellite.

To improve an endurance capability of the electronic device, when the satellite communication function is disabled, the satellite communication module may be in a powered-off sleep state, and when the satellite communication function is enabled, the satellite communication module may enter a powered-on state, and the electronic device attempts to connect to the Tiantong satellite by using the satellite communication module.

(3) When the satellite communication module is powered on, a mobile communication module (a cellular network function is unavailable), a wireless communication module (a Wi-Fi network function, an NFC function, and the like are unavailable), and a camera module (a photographing function is unavailable) are powered off.

To avoid system interference between the mobile communication module, the wireless communication module, the camera module, and the like and the satellite communication module, the mobile communication module, the wireless communication module, the camera module, and the like may be powered off when the satellite communication module is powered on, or a mobile communication network, a wireless communication network, and the photographing function are disabled at a software layer.

In some embodiments, the user usually uses the satellite communication function of the electronic device in an emergency scenario. In such a scenario, a battery capacity of the electronic device is limited, and powering of the mobile communication module, the wireless communication module, the camera module, and the like may further reduce power consumption of the electronic device, prolong standby time of the electronic device, and improve a rescue success possibility.
(4) Perform satellite search and satellite alignment when the satellite communication module is powered on.
(5) Output corresponding interface prompt information if satellite search and/or satellite alignment fail/fails.

A time threshold may be correspondingly set for satellite search and satellite alignment. The time threshold may be set based on actual requirements. This is not limited in this embodiment of this application. For example, the time threshold may be 60s, 90s, 120s, or the like. When satellite search is not successfully performed within a satellite search time threshold, the electronic device may output prompt information "Satellite search fails". When satellite search succeeds, but satellite alignment is not successfully performed within a satellite alignment time threshold, the electronic device may output prompt information "Satellite connection timeout".

In some embodiments, if the electronic device fails to perform satellite search, the electronic device may exit satellite search and satellite alignment in response to a user operation, that is, exit the satellite connection, or perform satellite search and satellite alignment again in response to a user operation to attempt to connect to the satellite again.

In some embodiments, when a satellite search state is entered, a satellite connection status interface may display a satellite search countdown. After the satellite search countdown ends, if the electronic device does not complete satellite search, the electronic device may output prompt information "Satellite search fails". After satellite search succeeds, the satellite connection status interface displays a connection countdown. After the connection countdown ends, if the electronic device fails to establish a connection with the satellite, the electronic device may output prompt information "Satellite connection timeout".

In some embodiments, possible reasons for failed satellite search or successful satellite search but failed satellite connection may include, but are not limited to: A satellite signal being blocked by an environmental object because the electronic device is in a non-open area, a satellite signal being weak due to blocking by a protective case of the electronic device, a wrong satellite alignment angle, satellite search timeout, and the like.
(6) Initiate network registration with the Tiantong satellite if satellite search and satellite alignment succeed.
(7) If the satellite communication service is activated for the SIM card, and network registration succeeds, a connection with the Tiantong satellite is established.
(8) Execute a satellite calling service and/or a satellite messaging service in response to a second operation of the user.

After the electronic device establishes the communication connection with the Tiantong satellite, the user may place a satellite call with another electronic device or send a satellite message by using the satellite communication function of the electronic device. For example, the electronic device may initiate a satellite call to a specified contact in response to the second operation of the user on a dialer interface, or the electronic device may send a satellite message to a specified contact in response to the second operation of the user on a messaging interface.

(9) Display corresponding prompt information if no satellite communication service is activated for the SIM card, network registration fails, and the communication connection with the Tiantong satellite cannot be established.

If no satellite communication service is activated for the SIM card installed on the electronic device, and the electronic device cannot perform network registration with the Tiantong satellite, that is, the electronic device cannot be connected to the Tiantong satellite, the electronic device may display prompt information "No satellite communication service is activated for the SIM card", or may display prompt information "The Tiantong satellite is limited to use by a user of the XX card, and please contact XX to activate the service before using the service".

In some embodiments, reasons for a failure of network registration with the Tiantong satellite may include: An international mobile equipment identity (International Mobile Equipment Identity, IMEI) of the electronic device is not registered with an XX operator, no satellite communication service is activated for the SIM card of the electronic device, roaming is not activated for the SIM card of the electronic device, and the like.

(10) Disconnect the communication connection with the Tiantong satellite.

After establishing the communication connection with the Tiantong satellite, the electronic device may further disconnect the communication connection from the Tiantong satellite. A disconnection manner may include active disconnection and passive disconnection.

The active disconnection may be that the user actively terminates the communication connection between the electronic device and the Tiantong satellite. The user may actively terminate, by using a satellite exit interface or a satellite switch interface, the communication connection between the electronic device and the Tiantong satellite. For example, the satellite exit interface is an interface in a "Satellite network" APP, and the user taps a "Disconnect" control in the "Satellite network" APP, to disconnect the communication connection from the Tiantong satellite. For example, the satellite switch interface is an interface including the "Satellite network" icon in the control center. The user taps the "Satellite network" icon (the icon is in gray) displayed in the control center, to disconnect the communication connection from the Tiantong satellite.

The passive disconnection may mean that a satellite loss occurs on the electronic device. The satellite loss may mean that because a position of the electronic device changes, a status of the connection between the electronic device and the Tiantong satellite is changed from a connected state to a disconnected state. For example, after the electronic device establishes the communication connection with the Tiantong satellite, the electronic device changes with a position or a handheld orientation of the user, which may cause disconnection of the communication connection from the Tiantong satellite.

When the satellite loss lasts for preset duration (which may also be referred to as satellite loss timeout), the electronic device may display corresponding prompt information. The preset duration may be set based on actual requirements. This is not limited in this embodiment of this application. For example, the preset duration is 60s. The corresponding prompt information may be pop-up dialog box prompt information "No satellite connection for 60 seconds. It is about to exit Tiantong satellite communication". The pop-up dialog box prompt information may include "Continue using" and "Exit (x seconds)" options. If the user does not tap the "Continue using" option before the x-second countdown expires, the electronic device automatically disables the satellite communication function.

(11) Turn off the satellite communication switch.

After disconnecting the communication connection from the Tiantong satellite, the electronic device may turn off the satellite communication switch automatically or in response to a user operation. When the electronic device turns off the satellite communication switch, the satellite communication module is powered off.

Alternatively, when the electronic device turns off the satellite communication switch, the electronic device may turn on the satellite communication switch again in response to a user operation.
(12) The satellite communication module is powered off.
(13) When the satellite communication module is powered off, the mobile communication module (the cellular network function is restored to be available), the wireless communication module (the Wi-Fi network function and the NFC function are restored to be available), and the camera module (the photographing function is restored to be available) are powered on.

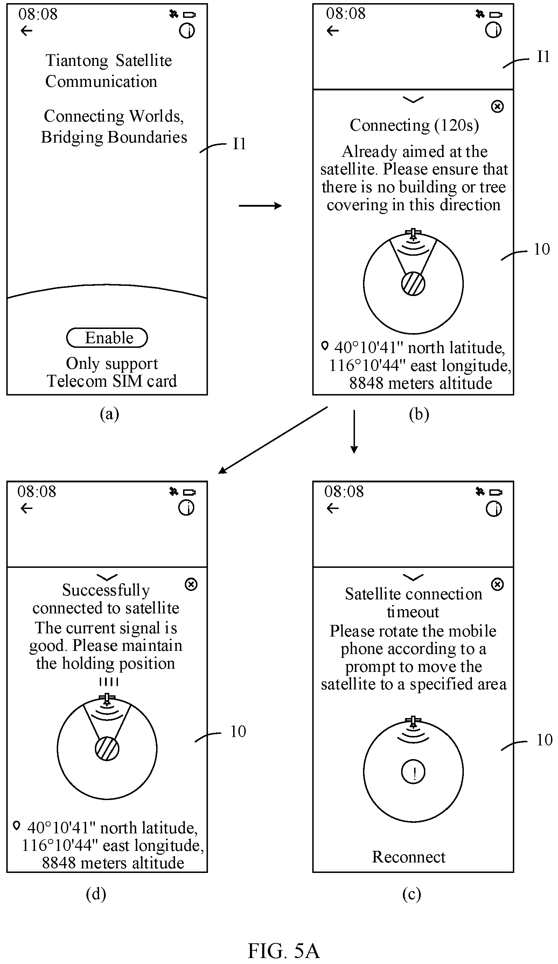

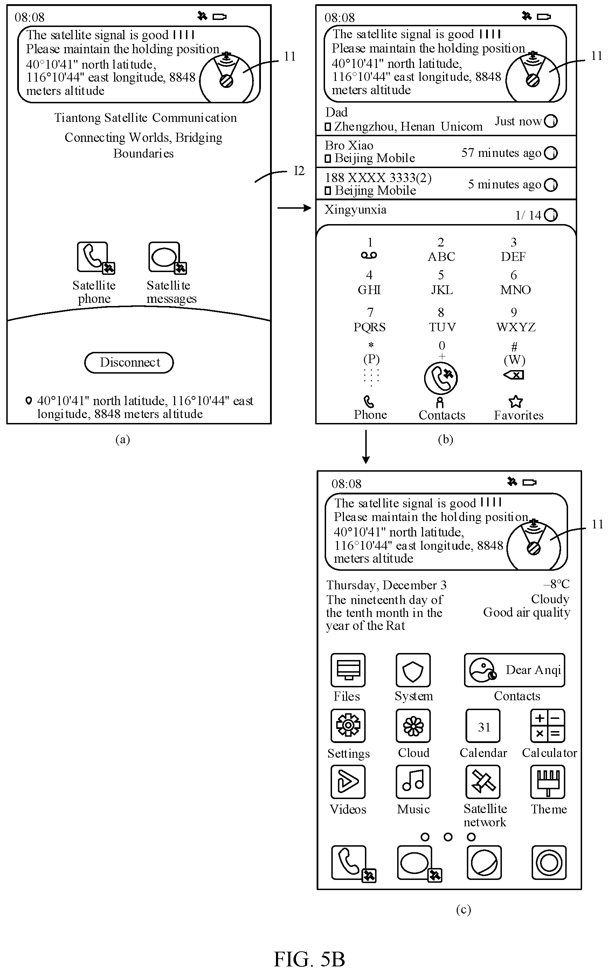

Refer to FIG. 5A and FIG. 5B. Descriptions are provided by using an example in which a satellite communication function is based on a Tiantong satellite, and a schematic diagram of an operation procedure of using the satellite communication function is briefly illustrated.
(a) in FIG. 5A is a schematic diagram of an enabling interface I1 of a satellite communication function. The enabling interface I1 includes an "Enable" control, and a user may tap the "Enable" control to enable the satellite communication function. The tap operation in this embodiment of this application may be a tap operation of the user by using a finger, or may be a tap operation of the user by using a stylus. A specific form of the tap operation is not limited in this embodiment of this application.

After the user taps the "Enable" control, an interface (a satellite connection status interface 10) showing that an electronic device is being connected to a Tiantong satellite may be displayed. The satellite connection status interface 10 is shown in (b) in FIG. 5A. The satellite connection status interface 10 overlaps a portion of the enabling interface I1. The satellite connection status interface 10 may be collapsed and presented in a form of a heads-up notification 11 (refer to (a) in FIG. 5B). This can reduce visual impact or operational impact on the user caused by blocking content of a lower layer interface by the satellite connection status interface 10. In (b) in FIG. 5A, the satellite connection status interface 10 may further display a satellite connection countdown (for example, countdown starting from 120s). Before the connection countdown ends, if a connection with the Tiantong satellite cannot be established, a connection timeout interface shown in (c) in FIG. 5A may be displayed. Before the connection countdown ends, if a connection with the Tiantong satellite is successfully established, a connection success interface shown in (d) in FIG. 5A may be displayed.

When the connection with the Tiantong satellite fails, the user may be prompted, by displaying an interface shown in (c) in FIG. 5A, that the satellite connection times out. In (c) in FIG. 5A, , the satellite connection status interface 10 may further display a "Reconnect" control, and the user may tap the "Reconnect" control to re-attempt to establish a connection with the Tiantong satellite. After the user taps the "Reconnect" control, the interface shown in (b) in FIG. 5A may be displayed again.

When the connection with the Tiantong satellite succeeds, the user may be prompted, by displaying an interface shown in (d) in FIG. 5A, that the satellite connection succeeds. In the satellite connection status interface 10 in (d) in FIG. 5A, signal strength of the connection between the electronic device and the Tiantong satellite may be displayed in real time by using a quantity of signal bars.

After the interface in(d) in FIG. 5A,s displayed, if the user collapses the satellite connection status interface 10, for example, through a swipe-down operation or a swipe-up operation, a satellite service using interface I2 shown in (a) in FIG. 5B may be further displayed. In(a) in FIG. 5B, after being collapsed, the satellite connection status interface 10 is presented in a form of the heads-up notification 11, and the heads-up notification 11 overlaps a portion of the satellite service using interface I2.

A "Satellite phone" icon and a "Satellite messages" icon may further be displayed in(a) in FIG. 5B. The user taps the "Satellite phone" icon, and a satellite phone dialer interface (as shown in (b) in FIG. 5B) may be entered. The user taps the "Satellite messages" icon, and a satellite messaging editing interface may be entered. In the satellite service interface I2, the "Satellite phone" icon incorporates a satellite identifier compared with a conventional (for example, when no satellite connection is established) "Phone" icon, and the "Satellite messages" icon incorporates a satellite identifier compared with an original "Messages" icon, for distinguishing.

A "Disconnect" control may be further displayed in(a) in FIG. 5B. The user may actively disconnect the connection from the Tiantong satellite by tapping the "Disconnect" control.

After the interface in(a) in FIG. 5B is displayed, if the user taps the "Satellite phone" icon, an interface shown in (b) in FIG. 5Bmay be displayed. In (b) in FIG. 5B, the satellite phone dialer interface and a heads-up notification 11 floating on the satellite phone dialer interface (the heads-up notification 11 is used for displaying a satellite connection status) may be presented. The satellite phone dialer interface includes a dialing keypad area, and a dialer icon in the dialing keypad area incorporates a satellite identifier compared with an original dialer icon. For example, information displayed in the heads-up notification 11 includes information such as status information of a satellite signal, a quantity of signal bars, posture prompt information of the handheld electronic device, a longitude/latitude, and an altitude.

After the interface in (b) in FIG. 5B is displayed, the user may further return to a home screen by using a swipe-up operation (for example, swiping up from the bottom of the screen), that is, a home screen shown in (c) in FIG. =5B is displayed. In(c) in FIG. =5B, a "Phone" icon displayed on the home screen is a "Satellite phone" icon, and a "Messages" icon is a "Satellite messages" icon, to prompt the user that the electronic device is currently connected to a satellite, and may place a satellite call or send a satellite message. In addition, a heads-up notification 11 is displayed on the home screen (the heads-up notification 11 is used for displaying a satellite connection status).

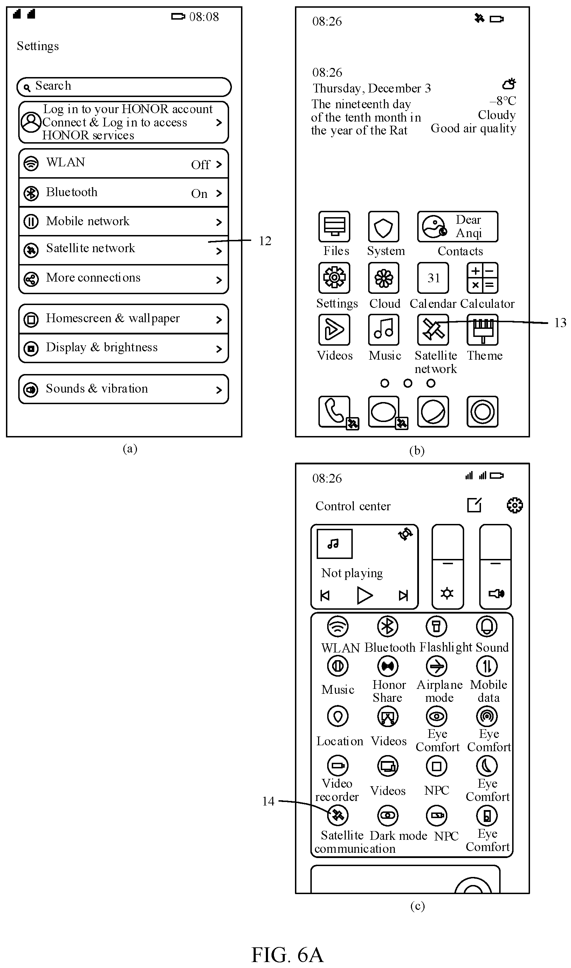

A schematic diagram of an operation procedure of enabling a satellite communication function is described in detail below with reference to FIG. 6A to FIG. 6F.

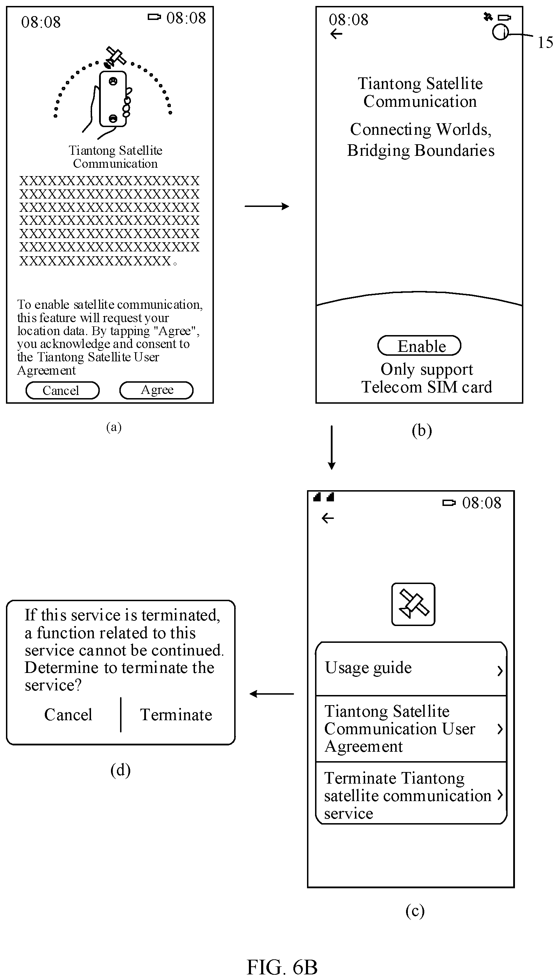

An electronic device may turn on a satellite communication switch in a plurality of manners. As shown in FIG. 6A, the satellite communication switch is turned on in three manners. (a) in FIG. 6A shows that a setting interface includes a "Satellite network" option 12. A user may tap the "Satellite network" option 12 in the setting interface to enter an enabling interface of a satellite communication function shown in FIG. 6B.

(b) in FIG. 6A shows that a home screen includes a "Satellite network" APP icon 13. The user may tap the "Satellite network" APP icon 13 to enter the enabling interface of the satellite communication function shown in FIG. 6B. (c) in FIG. 6A shows that a control center includes a "Satellite network" icon 14. The user may tap the "Satellite network" icon 14 in the control center to enter an enabling interface of a satellite communication function shown in FIG. 6B.

In (a) in FIG. 6B, if it is the first time for the user to enable the satellite communication function, a first-time setup interface of the satellite communication function may be displayed. The first-time setup interface includes a use description of Tiantong satellite communication, and two options "Cancel" and "Agree" are displayed. If the user taps the "Cancel" option, a previous interface may be returned to. For example, the interface shown in (a), (b), or (c) in FIG. 6A is returned to. If the user taps the "Agree" option, the enabling interface shown in (b) in FIG. 6B may be entered. The enabling interface shown in ((b) in FIG. 6B includes an "Enable" control. When the electronic device enters the enabling interface shown in (b) in FIG. 6B B, a status bar may further display a satellite identifier, and the satellite identifier may be located on a left side of a battery level icon.

In the enabling interface shown in (b) in FIG. 6B , prompt information "Only XX SIM card supported" (for example, "Only Telecom SIM card supported") may further be displayed. When the user taps the prompt information "Only XX SIM card supported", "Tiantong satellite communication is only limited to use by a user of an XX SIM card, and please contact XX to activate the service before using the service" may be displayed in a form of a pop-up dialog box. The user may further close the pop-up dialog box by tapping a "Got it" option in the pop-up dialog box. In another embodiment, before the prompt "Only XX SIM card supported" is output, whether a SIM card currently used by the electronic device is a SIM card that supports Tiantong satellite communication may be determined first. If a terminal device of a user uses a SIM card that supports a Tiantong satellite communication function, the prompt information prompting "Only XX SIM card supported" may not need to be displayed.

In some embodiments, if it is not the first time for the user to enable the satellite communication function, the user may directly skip (a) in FIG. 6B, and directly display the enabling interface shown in (b) in FIG. 6B .

In some embodiments, the first-time setup interface shown in (a) in FIG. 6B may also be set to be displayed each time the satellite communication function is enabled.

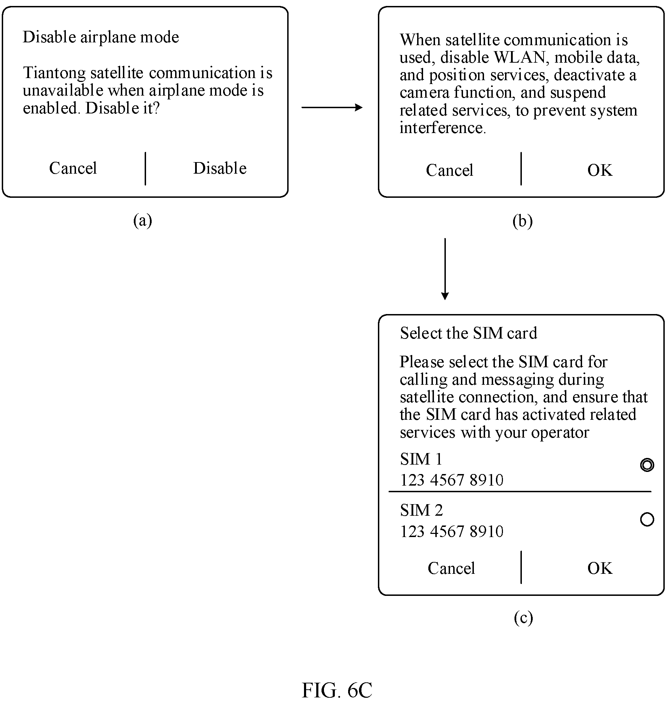

In some embodiments, when the user taps the "Enable" control shown in (b) in FIG. 6B and the electronic device is currently in airplane mode, a pop-up dialog box shown in (a) in FIG. 6C may pop up. Content of the pop-up dialog box may be "Disable airplane mode. Tiantong satellite communication is unavailable when airplane mode is enabled. Disable it?" The pop-up dialog box includes "Cancel" and "Disable" options. If the user taps the "Cancel" option, because airplane mode is not disabled, a Tiantong satellite communication function cannot be used.

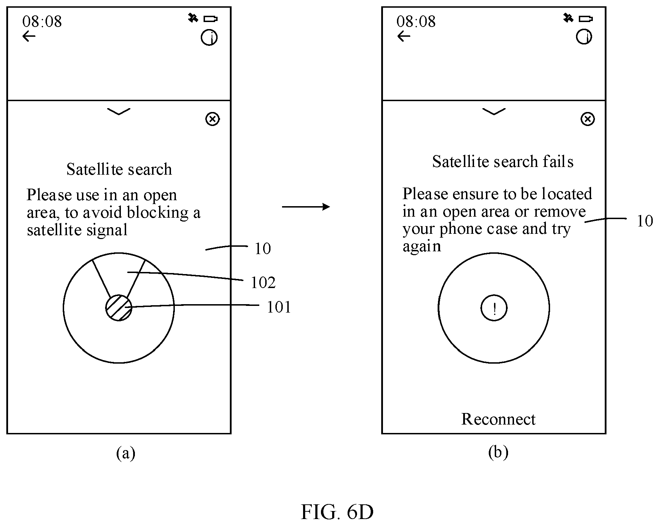

If the user taps the "Disable" option, that is, disables airplane mode, a pop-up dialog box shown in (b) in FIG. 6C pops up. Content of the pop-up dialog box may include "When satellite communication is used, disable WLAN, mobile data, and position services, deactivate a camera function, and suspend related services, to prevent system interference". The pop-up dialog box includes "Cancel" and "OK" options. If the user taps the "Cancel" option, Tiantong satellite communication cannot be used. If the user taps the "OK" option, a pop-up dialog box shown in (c) in FIG. 6C may be displayed subsequently, or a satellite connection status interface 10 shown in (a) in FIG. 6D may be activated.

In some embodiments, when the user taps the "Enable" control shown in (b) in FIG. 6B and the electronic device is currently not in airplane mode, a pop-up dialog box shown in (a) in FIG. 6C may directly pop up.

The pop-up dialog box shown in (c) in FIG. 6C is a prompt box for SIM card selection for initial use of a Tiantong satellite function. Content of the pop-up dialog box includes selection options, namely, "SIM 1", "SIM 2", "Cancel", and "OK", and related SIM card selection prompt information. For example, the SIM card selection prompt information is "Select SIM card: Please select the SIM card for calling and messaging during satellite connection, and ensure that related services have been activated for the SIM card with your operator". The user may select "SIM 1" or "SIM 2" in the pop-up dialog box, and tap the "OK" option to complete SIM card selection, to subsequently activate the satellite connection status interface 10 shown in (a) in FIG. 6D. The satellite connection status interface 10 is located above the enabling interface shown in (b) in FIG. 6B, and partially overlaps the enabling interface shown in (b) in FIG. 6B,

In some embodiments, if the electronic device has preconfigured a specific SIM card as a SIM card for Tiantong satellite connectivity before enabling the satellite communication function, user selection of the SIM card may be bypassed, and the SIM card selection prompt box displays a default-selected SIM card or the SIM card selection prompt box is not displayed.

In some embodiments, if the electronic device does not support dual SIM dual standby or the electronic device is provided with only one SIM card, the pop-up dialog box shown in (c) in FIG. 6C may be skipped.

In some embodiments, the interface shown in(b) in FIG. 6B,further includes an "About" icon 15, and the user may tap the "About" icon 15 for SIM card switching. For example, the user may tap the "About" icon 15, so that the interface shown in (c) in FIG. 6B may be displayed. The interface includes "Usage guide", "Tiantong Satellite Communication User Agreement", and "Terminate Tiantong satellite communication service" options. The user may switch a SIM card by using the "Usage guide" option.

If the user taps the "Terminate Tiantong satellite communication service" option, a pop-up dialog box may be displayed. As shown in (d) in FIG. 6B, the pop-up dialog box may include prompt information, "Cancel", and "Terminate" options. Content of the prompt information may be "If this service is terminated, a function related to this service cannot be continued. Determine to terminate the service?". If the "Cancel" option is tapped, the Tiantong satellite communication service is not terminated. If the "Terminate" option is tapped, the Tiantong satellite communication service is terminated.

In the satellite connection status interface 10 shown in (a) in FIG. 6D, prompt information for satellite search and a motion effect of satellite search may be displayed. The prompt information for satellite search may include "Satellite search: Please use in an open area, to avoid blocking satellite singnal". The motion effect of satellite search may be that an Earth pattern 101 is used as a central area, and a sector area 102 of a specified color (for example, blue) circularly rotates around the Earth pattern 101.

If satellite search fails, content displayed on the satellite connection status interface 10 is shown in (b) in FIG. 6D. The satellite connection status interface 10 shown in (b) in FIG. 6D. includes satellite search failure prompt information and a "Reconnect" control. Content of the satellite search failure prompt information may include "Satellite search fails: Please move to an open area or remove your phone case and try again". If the user taps the "Reconnect" control, the electronic device may perform satellite search for another time.

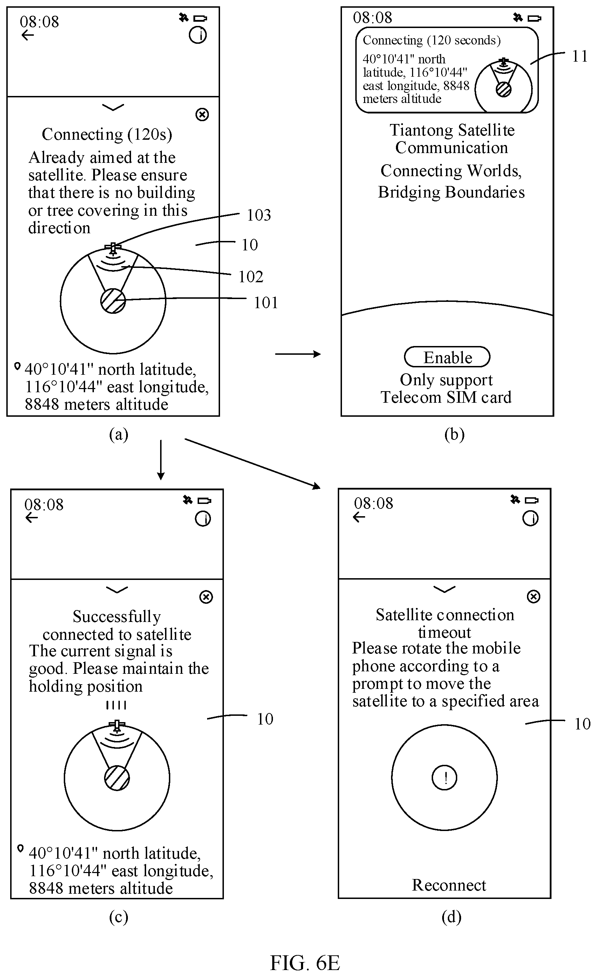

If satellite search succeeds, content displayed on the satellite connection status interface 10 is shown in (a) in FIG. 6E. The satellite connection status interface 10 shown in (a) in FIG. 6E includes a connecting countdown (for example, a countdown starting from 120s), connecting prompt information, a connecting motion effect, and a current longitude, latitude, and altitude of the electronic device. The connecting prompt information may include "Connecting (*** s): Already aimed at the satellite. Please confirm that there is no building or tree covering in this direction", and the connecting motion effect may be a motion effect of the Earth pattern 101 continuously receiving a signal transmitted by the satellite pattern 103.

In some embodiments, the satellite connection status interface 10 shown in (a) in FIG. 6E may further be collapsed through a swipe-down operation. As shown in (b) in FIG. 6E, after being collapsed, the satellite connection status interface 10 is presented in a form of a heads-up notification 11.

Before the countdown ends, if a connection with the Tiantong satellite is successfully established, content displayed on the satellite connection status interface 10 is shown in (c) in FIG. 6E. Before the countdown ends, if a connection with the Tiantong satellite is unsuccessfully established, an interface shown in (d) in FIG. 6E may be displayed. The interface shown in(d) in FIG. 6E includes satellite connection timeout prompt information and a "Reconnect" control. The satellite connection timeout prompt information may be: "Satellite connection timeout: Please follow the prompt to rotate your phone, to center the satellite in the specified area". If the user taps the "Reconnect" control, the electronic device may attempt to establish a connection with the Tiantong satellite.

In some embodiments, before countdown ends, if a connection with the Tiantong satellite is unsuccessfully established, a connection timeout prompt box may further be displayed. Content of the connection timeout prompt box may include "No Tiantong satellite service may be activated for the SIM card. Please contact a related operator, and try again after the service is activated".

In the satellite connection status interface 10 shown in (c) in FIG. 6E, prompt information indicating that the electronic device has been successfully connected to the Tiantong satellite, strength of a satellite signal, and an effect drawing showing that the Earth pattern 101 and the satellite pattern 103 have been connected are displayed. The prompt information indicating successful connection with the Tiantong satellite may include "Successfully connected to the satellite: The current signal is good. Please maintain the holding position". Strength of a satellite signal may be displayed by using a quantity of signal bars. The effect drawing showing that the Earth pattern 101 and the satellite pattern 103 have been connected may be a motion effect of expanding a signal waveform by the satellite pattern 103 in a direction of the Earth pattern 101, or a motion effect of expanding a signal waveform by the Earth pattern 101 in a direction of the satellite pattern 103.

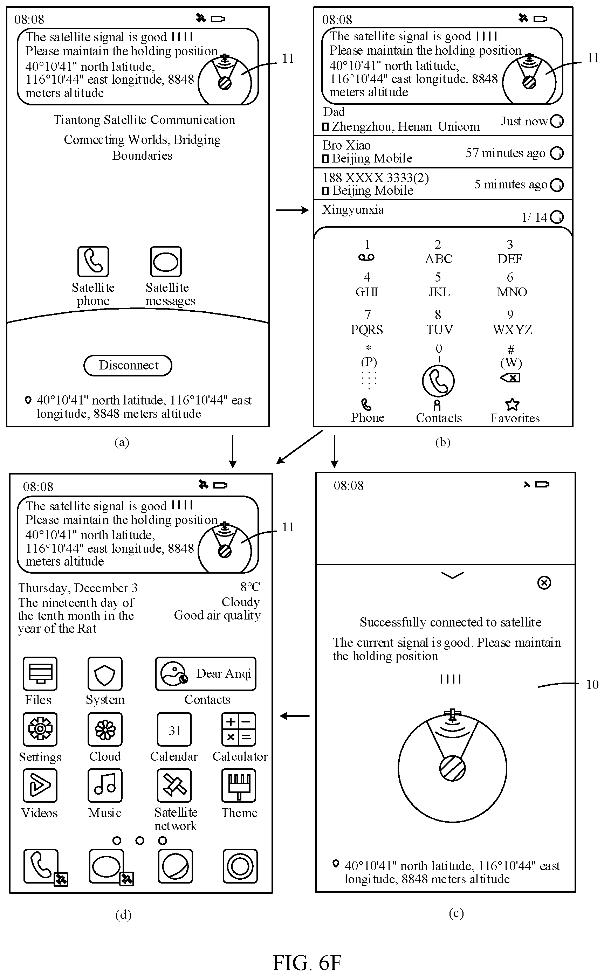

The satellite connection status interface 10 shown in (c) in FIG. 6E, also supports being collapsed through a swipe-down operation. As shown in (a) in FIG. 6F, after being collapsed, the satellite connection status interface 10 is presented in a form of a heads-up notification 11.

In some embodiments, when a satellite signal is strong (for example, satellite signal strength of 2 bars or more), the sector area 102 may be displayed in a color 1; and when the satellite signal is weak (for example, satellite signal strength of less than 2 bars), the sector area 102 may be displayed in a color 2. In this way, the user intuitively determines current satellite signal strength. For example, the color 1 may be green, and the color 2 may be blue.

A "Satellite network" APP interface in (a) in FIG. 6F,may further display a "Satellite phone" icon and a "Satellite messages" icon. The user taps the "Satellite phone" icon, and a satellite phone dialer interface may be entered, as shown in (b) in FIG. 6F. The user taps the "Satellite messages" icon, and a satellite messaging editing interface may be entered. The "Satellite phone" icon incorporates a satellite identifier compared with an original (that is, a satellite communication function is not enabled) "Phone" icon, and the "Satellite messages" icon incorporates a satellite identifier compared with an original "Messages" icon.

The "Disconnect" control may further be displayed on the "Satellite network" APP interface in (a) in FIG. 6F,. The user may actively disconnect the connection from the Tiantong satellite by tapping the "Disconnect" control. If the user taps the "Disconnect" control, a prompt box may first pop up to confirm disconnection. The prompt box may include disconnection prompt information, a "Cancel" option, and an "OK" option. The disconnection prompt information may be "Determine to exit Tiantong satellite communication?". If the user taps the "OK" option again, the electronic device disconnects the connection from the Tiantong satellite.

In (b) in FIG. 6F, for ease of dialing by the user, the satellite connection status interface 10 is presented in a form of a heads-up notification 11 by default. In a dialing keypad area shown in (b) in FIG. 6F, a dialer icon incorporates a satellite identifier compared with an original dialer icon, to prompt the user that a call currently dialed is a satellite call.

The heads-up notification 11 shown in (b) in FIG. 6Fmay also be expanded. For example, a double-tap operation or a swipe-down operation may be performed on the heads-up notification 11, to expand the satellite connection status interface 10. As shown in (c) in FIG. 6F, a display state of the heads-up notification 11 shown in (b) in FIG. 6F when the heads-up notification 11 is expanded is shown.

The user may further return to a home screen by using a swipe-up operation (for example, swiping up from the bottom of the screen), that is, an interface shown in (d) in FIG. 6F is displayed. For example, the electronic device currently displays interface content shown in (a), (b), or (c) in FIG. 6F. The user may return to the home screen by using a swipe-up operation. The electronic device switches to display an interface shown in (d) in FIG. 6F.

In (d) in FIG. 6F, a "Phone" icon displayed on the home screen is a "Satellite phone" icon, and a "Messages" icon is a "Satellite messages" icon. In addition, a heads-up notification 11 is displayed on the home screen (the heads-up notification 11 is used for displaying a satellite connection status).

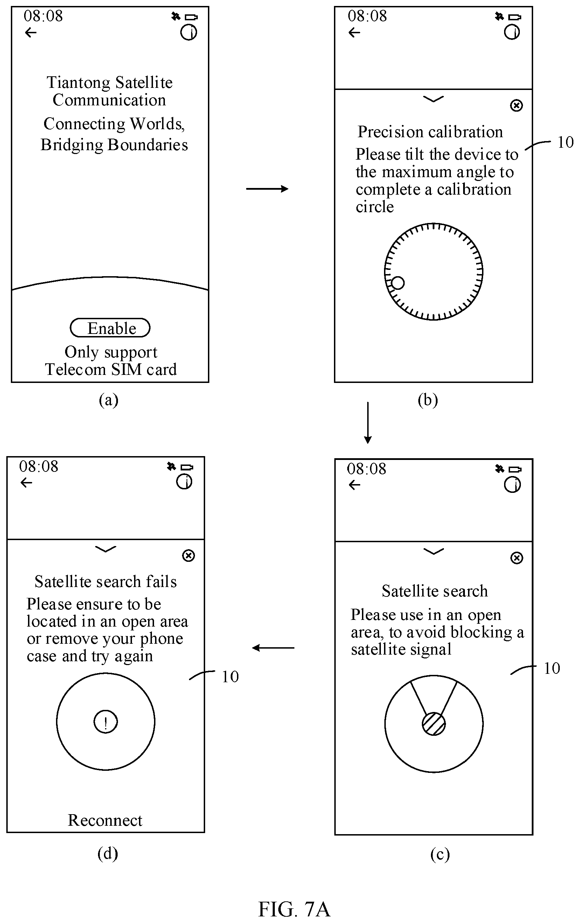

A schematic diagram of an operation procedure in which an electronic device establishes a connection with a satellite is described in detail below with reference to FIG. 7A to FIG. 7D.

An enabling interface shown in (a) in FIG. 7A is the same as the enabling interface shown in (b) in FIG. 6B. Details are not described herein again.

After the user taps an "Enable" control, if precision of a magnetic field sensor of the electronic device does not meet a preset requirement, calibration is triggered, and a satellite connection status interface 10 shown in (b) in FIG. 7A is displayed, to perform precision calibration. If the precision of the magnetic field sensor of the electronic device meets the preset requirement, calibration is not triggered, and a satellite connection status interface 10 shown in (c) in FIG. 7A is displayed.

The satellite connection status interface 10 shown in (b) in FIG. 7A includes calibration prompt information and a calibration motion effect. The calibration motion effect may be that a round ball may rotate at an edge of a circle as the user tilts the electronic device. The calibration prompt information may include "Precision calibration: Please tilt the device to the maximum angle to complete a calibration circle". The user may calibrate the magnetic field sensor based on the calibration prompt information. After completing calibration of the magnetic field sensor, the satellite connection status interface 10 shown in (c) in FIG. 7A may be displayed.

The satellite connection status interface 10 shown in (c) in FIG. 7A is the same as the satellite connection status interface 10 shown in (a) in FIG. 6D. Details are not described herein again.

If the electronic device cannot find the satellite, content displayed on the satellite connection status interface 10 changes from the interface shown in (c) in FIG. 7A to an interface shown in (d) in FIG. 7A. The satellite connection status interface 10 shown in (d) in FIG. 7A is the same as the satellite connection status interface 10 shown in (b) in FIG. 6D. Details are not described herein again.

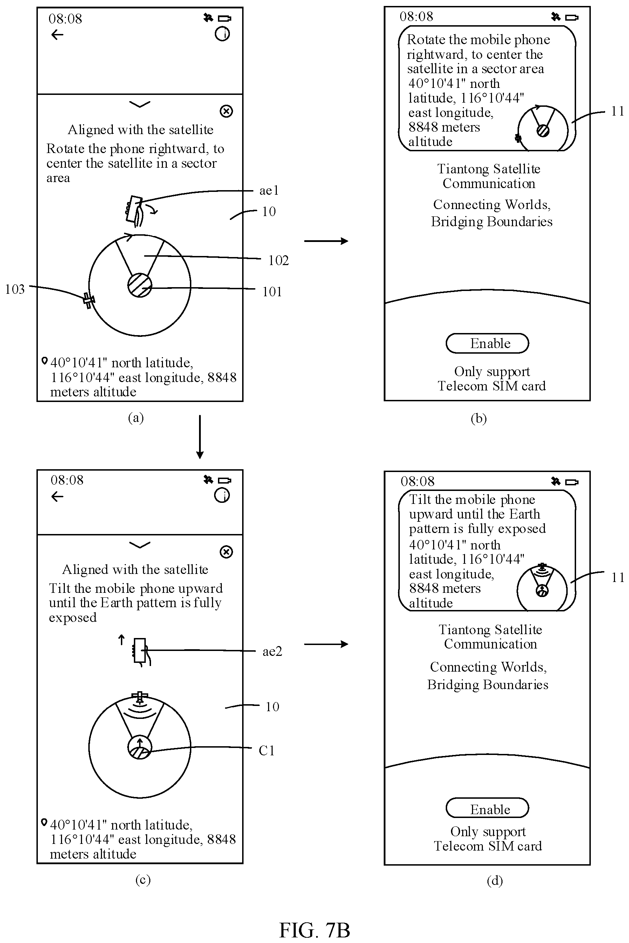

If the electronic device successfully finds the satellite, content displayed on the satellite connection status interface 10 changes from the interface shown in (c) in FIG. 7A to an interface shown in (a) in FIG. 7B. The satellite connection status interface 10 shown in (a) in FIG. 7B. may include alignment prompt information, an alignment motion effect, and a current longitude, latitude, and altitude of the electronic device. The alignment prompt information may include "Align with the satellite: Rotate the mobile phone rightward, and move the satellite to a sector area 102". The alignment motion effect may include a motion effect ae1 of the handheld mobile phone rotating rightward and a motion effect of a satellite pattern 103 aligned with an Earth pattern 101. In a motion effect of the satellite pattern 103 aligned with the Earth pattern 101, the satellite pattern 103 may rotate around the Earth pattern 101 as the user rotates the mobile phone. For example, as the user rotates the mobile phone rightward, the satellite pattern 103 tracks clockwise along a circle shown in (a) in FIG. 7B.. After the satellite pattern 103 moves to a sector area 102 shown in (a) in FIG. 7B., it indicates that satellite azimuth alignment is completed. The satellite connection status interface 10 shown in (a) in FIG. 7B. may be collapsed, and is presented in a form of a heads-up notification 11. For example, the satellite connection status interface 10 may be collapsed in response to a swipe-down operation of the user, and a display effect after the satellite connection status interface 10 is collapsed is shown in (b) in FIG. 7B.

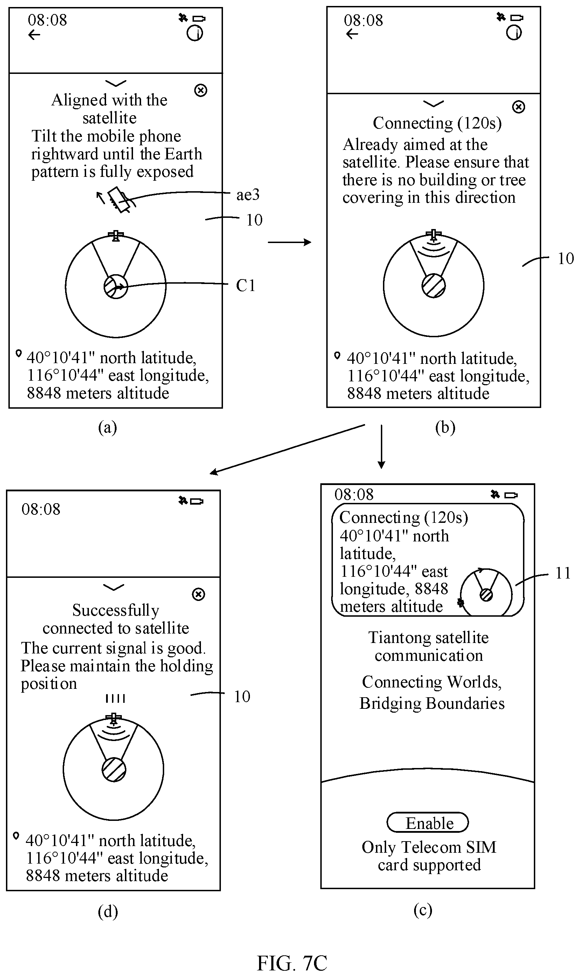

In a process of performing satellite azimuth alignment, as the satellite pattern 103 moves to the sector area 102 shown in(a) in FIG. 7B., the Earth pattern 101 may not be fully exposed, indicating that pitch angle alignment or third-dimensional angle (left-right roll angle) alignment further needs to be performed. That is, content displayed on the satellite connection status interface 10 is changed from the interface shown in (a) in FIG. 7B to an interface shown in (c) in FIG. 7B or an interface shown in (a) in FIG. 7C.

The satellite connection status interface 10 shown in (c) in FIG. 7B may include alignment prompt information, an alignment motion effect, and a current longitude, latitude, and altitude of the electronic device. The alignment prompt information may include "Align with the satellite: Tilt the mobile phone upward until the Earth pattern 101 is fully exposed". The alignment motion effect may include a motion effect ae2 of the handheld mobile phone tilting upward and a motion effect of the Earth pattern 101 exposed upward or hidden downward. As the mobile phone tilts upward, the Earth pattern 101 may be exposed from the bottom to the top, and gradually expands until the Earth pattern 101 is fully exposed (with the Earth pattern 101 filling a central circle C1), indicating that the mobile phone achieves pitch angle alignment with the Tiantong satellite. Content displayed on the satellite connection status interface 10 may be changed from the interface shown in (c) in FIG. 7B to an interface shown in (b) in FIG. 7C. The motion effect of the Earth pattern 101 exposed upward or hidden downward may enable the user to intuitively learn whether the mobile phone achieves pitch angle alignment with the Tiantong satellite, thereby reducing time of pitch angle alignment, and improving satellite alignment experience of the user. The satellite connection status interface 10 shown in (c) in FIG. 7B may be collapsed, and is presented in a form of a heads-up notification 11. For example, the satellite connection status interface 10 may be collapsed in response to a swipe-down operation of the user, and a display effect after the satellite connection status interface 10 is collapsed is shown in (d) in FIG. 7B. The heads-up notification 11 may also display alignment prompt information, an alignment motion effect, and a current longitude, latitude, and altitude of the electronic device.

The satellite connection status interface 10 shown in (a) in FIG. 7C may include alignment prompt information, an alignment motion effect, and a current longitude, latitude, and altitude of the electronic device. The alignment prompt information may include "Align with the satellite: Tilt the mobile phone rightward until the Earth pattern 101 is fully exposed". The alignment motion effect may include a motion effect ae3 of the handheld mobile phone tilting rightward and a motion effect of the Earth pattern 101 exposed rightward or hidden leftward. As the mobile phone tilts rightward, the Earth pattern 101 may be exposed from the left side to the right, and gradually expands until the Earth pattern 101 is fully exposed (with the Earth pattern 101 filling a central circle C1), indicating that the mobile phone achieves third-dimensional angle alignment with the Tiantong satellite. Content displayed on the satellite connection status interface 10 may be changed from the interface shown in (a) in FIG. 7C to an interface shown in (b) in FIG. 7C. The motion effect of the Earth pattern 101 exposed rightward or hidden leftward may enable the user to intuitively learn whether the mobile phone achieves third-dimensional angle alignment with the Tiantong satellite, thereby reducing time of third-dimensional angle alignment, and improving satellite alignment experience of the user. The satellite connection status interface 10 shown in (a) in FIG. 7C may also be collapsed, and is presented in a form of a heads-up notification 11.

After satellite orientation alignment is completed, if both a pitch angle and a third-dimensional angle between the electronic device and the Tiantong satellite satisfy a preset requirement (for example, the Earth pattern 101 is fully exposed from the central circle C1), it indicates that pitch angle alignment or third-dimensional angle alignment with the satellite does not need to be performed. Content displayed on the satellite connection status interface 10 may be changed from the interface shown in (a) in FIG. 7B to the interface shown in (b) in FIG. 7C. The satellite connection status interface 10 shown in(b) in FIG. 7C. may be collapsed, and is presented in a form of a heads-up notification 11. For example, the satellite connection status interface 10 may be collapsed in response to a swipe-down operation of the user, and a display effect after the satellite connection status interface 10 is collapsed is shown in (c) in FIG. 7C.

The satellite connection status interface 10 shown in (b) in FIG. 7C. is the same as the satellite connection status interface 10 shown in (a) in FIG. 6E. Details are not described herein again.

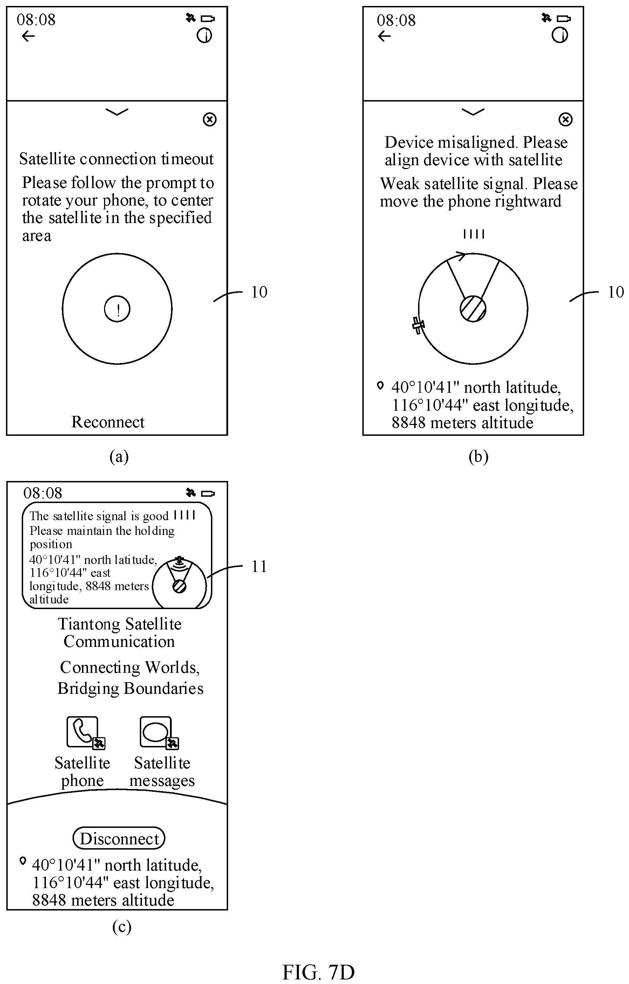

After the interface shown in(b) in FIG. 7C. is displayed, before the countdown ends, if a connection with the Tiantong satellite is successfully established, content displayed on the satellite connection status interface 10 is shown in (d) in FIG. 7C. The satellite connection status interface 10 shown in (d) in FIG. 7C. is the same as the satellite connection status interface 10 shown in (c) in FIG. 6E. Details are not described herein again. Before the countdown ends, if a connection with the Tiantong satellite is unsuccessfully established, content displayed on the satellite connection status interface 10 is shown in (a) in FIG. 7D. The satellite connection status interface 10 shown in (a) in FIG. 7D. is the same as the satellite connection status interface 10 shown in (d) in FIG. 6E. Details are not described herein again.

After the interface shown in (d) in FIG. 7C is displayed, if a position and/or a posture of the electronic device changes, a satellite signal may be poor and the satellite needs to be redirected. Content displayed on the satellite connection status interface 10 may be changed from the interface shown in (d) in FIG. 7Cto the interface shown in (b) in FIG. 7D, to prompt the user to redirect to the satellite. The interface shown in(b) in FIG. 7D may include realignment prompt information, an alignment motion effect, and a current longitude, latitude, and altitude of the electronic device. The realignment prompt information may include "Device misaligned. Please align device with satellite: Weak satellite signal. Please move the mobile phone rightward". After satellite alignment is completed, the content displayed on the satellite connection status interface 10 may be changed from the interface shown in (b) in FIG. 7D to an interface shown in (d) in FIG. 7C. Alternatively, after a satellite alignment object is completed, if pitch angles are not aligned, the content displayed on the satellite connection status interface 10 may be changed from the interface shown in(b) in FIG. 7Dto the interface shown in (c) in FIG. 7B. Alternatively, if third-dimensional angles are not aligned, the content displayed on the satellite connection status interface 10 may be changed from the interface shown in(b) in FIG. 7D to the interface shown in (a) in FIG. 7C.

After the interface shown in (d) in FIG. 7C is displayed for preset duration, the satellite connection status interface 10 may be automatically collapsed, and is presented in a form of a heads-up notification 11, or the satellite connection status interface 10 may be collapsed in response to a swipe-down operation of the user, and is presented in a form of a heads-up notification 11. A display effect after the satellite connection status interface 10 is collapsed is shown in (c) in FIG. 7D. The preset duration may be set based on actual requirements. This is not limited in this embodiment of this application. For example, the preset duration is 3s. The interface shown in (c) in FIG. 7D. is the same as the interface shown in (a) in FIG. 6F. Details are not described herein again.

After the electronic device successfully establishes a connection with the Tiantong satellite, the user may place a satellite call and send a satellite message.

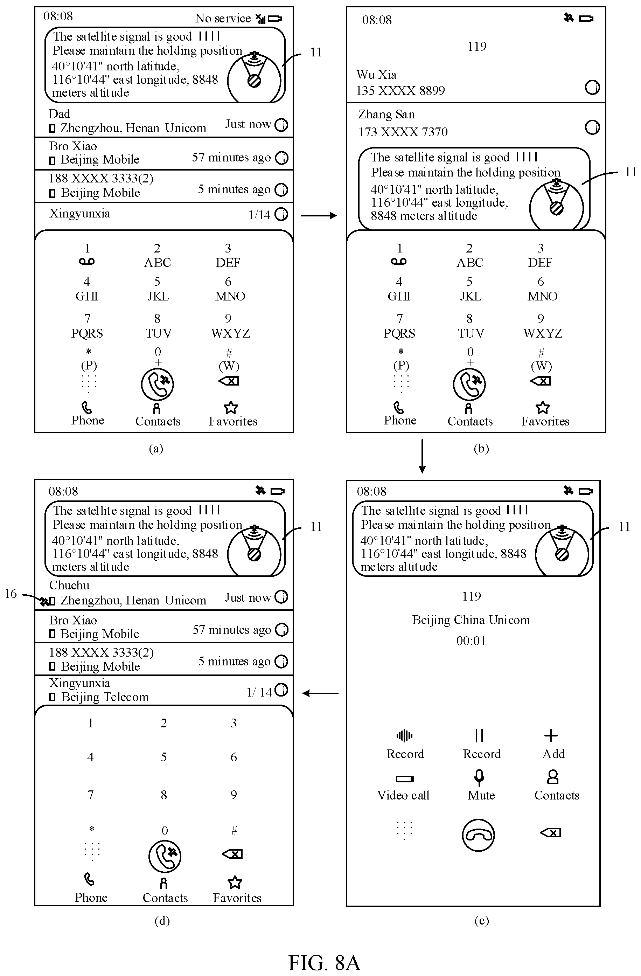

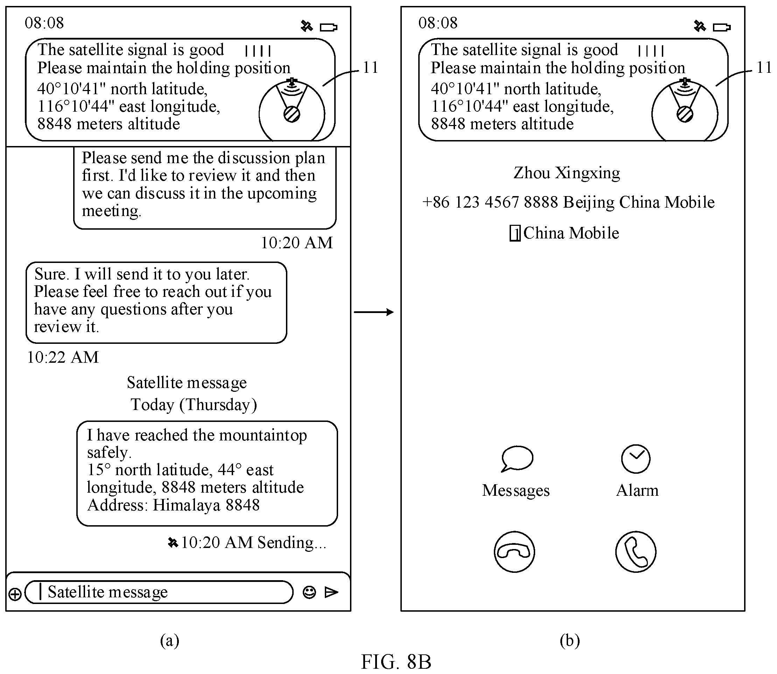

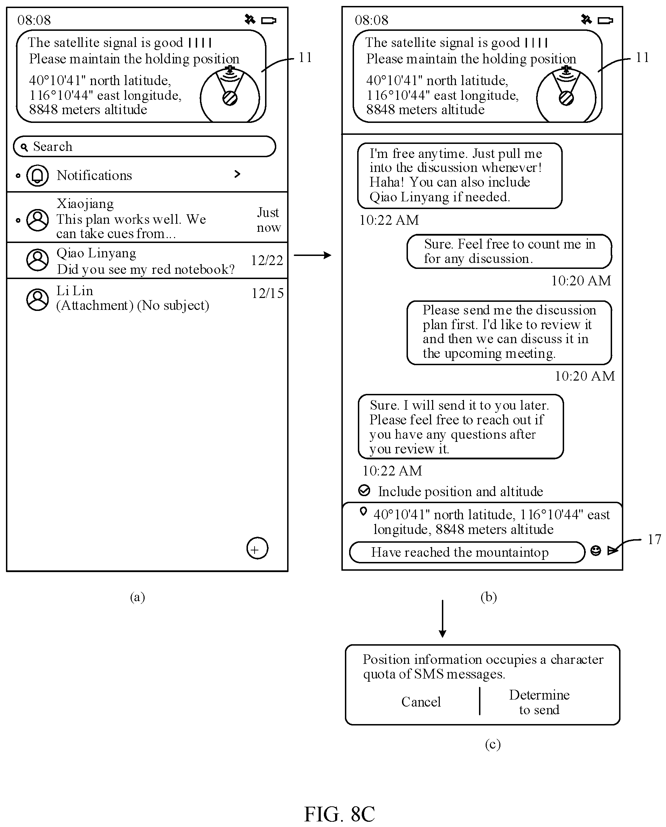

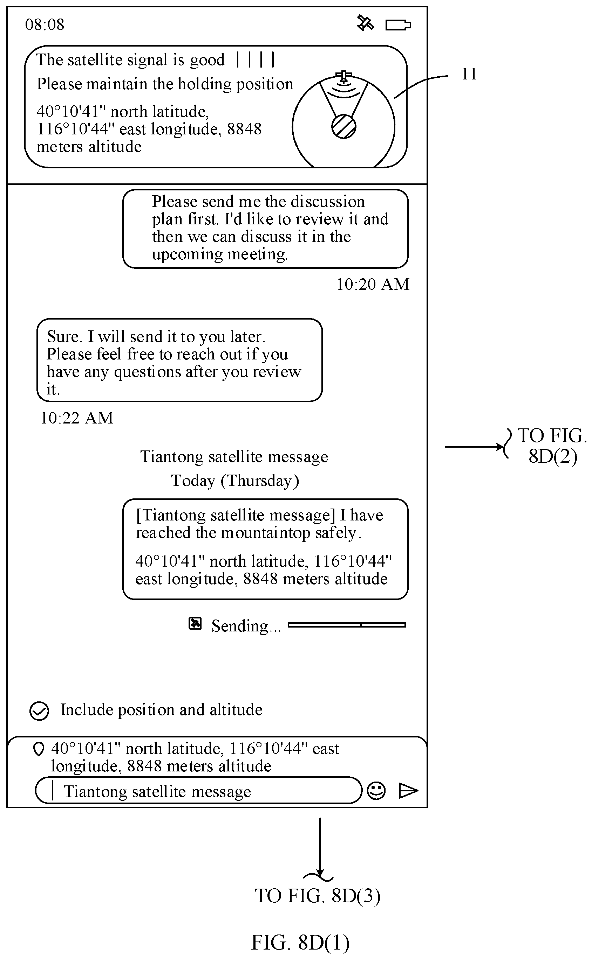

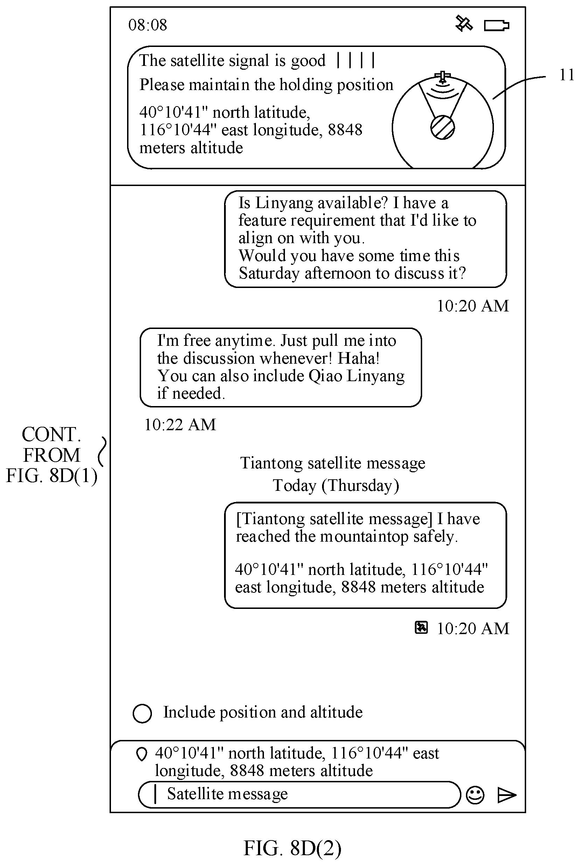

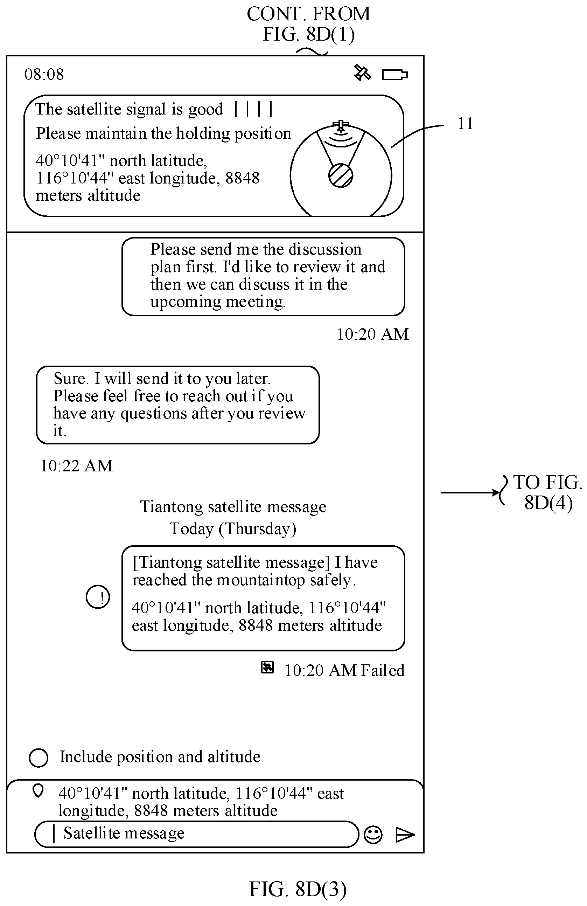

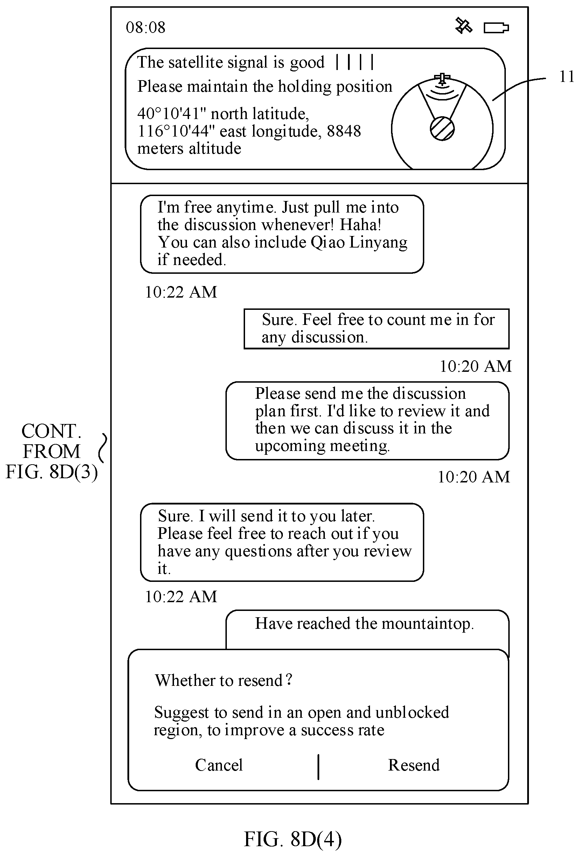

A schematic diagram of an operation procedure of placing a satellite call is described in detail below with reference to FIG. 8A and FIG. 8B, and a schematic diagram of an operation procedure of sending a satellite message is described in detail below with reference to FIG. 8C and FIG. 8D(1) to FIG. 8D(4).

As shown in (a) in FIG. 8A, for ease of dialing by a user, in a case of displaying a satellite phone dialer interface, a satellite connection status interface 10 is presented in a form of a heads-up notification 11 by default. The heads-up notification 11 may be moved in response to a long-press operation acting on the heads-up notification 11 by the user. A default display position of the heads-up notification 11 may be an upper section of the satellite phone dialer interface.

In some embodiments, to reduce visual occlusion impact of the heads-up notification 11 on a lower-layer interface, the heads-up notification 11 may further be designed to have a translucent display effect.

As shown in (b) in FIG. 8A, when the user dials in a dialing keypad area, a number display area of the satellite phone dialer interface may display input digits of the user, and a heads-up notification 11 may automatically avoid the dialing keypad area and the number display area, to prevent overlapping with the dialing keypad area and the number display area, which affects dialing experience of the user.

For example, if it is detected that a currently displayed interface is the satellite phone dialer interface, and a tapping operation of the user is received for digits (0 to 9), "*", or "#" in the dialing keypad area, the heads-up notification 11 is configured to be displayed in a specified area, and the specified area may be an area between the dialing keypad area and the number display area.

In some embodiments, for another interface displayed by the electronic device, a rule of active avoidance performed by the heads-up notification 11 may also be configured. The avoidance rule may be set based on that an operation performed by the user on a currently displayed interface is not affected, to reduce visual impact or operational impact on the user caused by blocking of content of a lower-layer interface by the heads-up notification 11.

When the user completes inputting a phone number and connection establishment is implemented for the phone number, content displayed on the interface is shown in (c) in FIG. 8A.

In some embodiments, a satellite call usually does not support functions such as a video call and a multi-user call. A call interface shown in (c) in FIG. 8A may further omit "Wait", "Add", and "Video call" options.

In some embodiments, after the user completes the satellite call, content displayed on the interface is shown in (d) in FIG. 8A. In a call record interface shown in (d) in FIG. 8A, a call record of the satellite call incorporates a satellite identifier compared with a call record of a call placed based on a mobile communication network, to indicate that the call is a satellite call. For example, in the call record interface shown in (d) in FIG. 8A, a call record of a contact "Chuchu" incorporates a satellite identifier 16, indicating that a call with "Chuchu" is a satellite call, and a call record of a contact "Xiaoge" does not have a satellite identifier, indicating that a call with "Xiaoge" is a call placed based on a mobile communication network.

In some embodiments, a call record in the call details may also include a satellite identifier to indicate that the call is a satellite call.

(a) and (b) in FIG. 8B are diagrams of interfaces showing that after the electronic device successfully establishes a connection with a Tiantong satellite, an incoming call is received from the satellite.

As shown in (a) in FIG. 8B, it is assumed that before the incoming call from the satellite is received, a displayed interface is a messaging interface. When the incoming call from the satellite is received, the interface is changed to an incoming call interface shown in (b) in FIG. 8B. The user may tap an answering icon in the incoming call interface shown in (b) in FIG. 8B. to answer the incoming call from the satellite, or a hang-up icon to hang up the incoming call from the satellite.

(a) in FIG. 8C shows a satellite message home screen, which is basically the same as an original (that is, a satellite communication function is not enabled) message home screen. A difference lies in that a satellite connection status interface 10 is displayed on the satellite message home screen in a form of a heads-up notification 11.

(b) in FIG. 8C shows an interface in which a message conversation is performed with a contact. The interface may display records (satellite messages and conventional messages) of previous messages with the contact. When the user does not input content in a message input field, a send button 17 may be gray by default. When the user inputs content in the message input field, the send button 17 may change from gray to a specified color (for example, change from gray to green).

Compared with a conventional message conversation interface, an interface shown in (b) in FIG. 8C further incorporates a "Include position and altitude" option and a position-altitude display area between the option and a message input field. The position-altitude display area may display a longitude, a latitude, and an altitude obtained by the electronic device, for example, "40°10'41'' north latitude, 116°10'44'' east longitude, 8848 meters altitude" shown in (b) in FIG. 8C. The "Include position and altitude" option may be set to be unchecked by default. If the user checks the option, the policy (carrying position and altitude information) is executed for this to-be-sent satellite message by default, and the option is still unchecked for other messages by default. That is, each time the "Include position and altitude" option is checked, the option only applies to a current to-be-sent satellite message.

In some embodiments, the position and the altitude information may be obtained when a connection with the Tiantong satellite is established. If the position and the altitude information need to be updated, a reconnection may be established after the connection with the Tiantong satellite is disconnected.

In some embodiments, if the Tiantong satellite cannot obtain a current position and altitude of the electronic device, the position-altitude display area may display "Not obtain positioning information".

In some embodiments, if the user checks the "Include position and altitude" option, when the user taps the send button 17, a prompt box shown in (c) in FIG. 8C may further be displayed. The prompt box may include prompt information "Position information occupies a character quota of messages", and "Cancel", and "Determine to send" options. If the user taps the "Cancel" option, a satellite message is not sent. If the user taps the "Determine to send" option, a satellite message is sent. An interface for sending a satellite message is shown in (a) in FIG. 8D(1).

In the interface shown in (a) in FIG. 8D(1), a progress bar of sending a satellite message is basically the same as a progress bar of sending a conventional message. A difference lies in that a satellite identifier is added. The satellite identifier may be displayed on the left side of "Sending", to indicate that a message that is being sent is a satellite message.

If content input by the user in a conventional message input field is "I have reached the mountaintop safely", content displayed on the message conversation interface after sending is also "I have reached the mountaintop safely". As shown in (a) in FIG. 8D(1), if the user sends a satellite message, content of the message is "I have reached the mountaintop safely", and the "Include position and altitude" option is checked, content displayed on the message conversation interface after sending is "[Tiantong satellite message] I have reached the mountaintop safely. 40°10'41'' north latitude, 116°10'44'' east longitude, 8848 meters altitude ".

After the satellite message is successfully sent, content displayed on the interface may be changed from the interface shown in (a) in FIG. 8D(1) to an interface shown in (b) in FIG. 8D(2). Time for sending of the satellite message incorporates a satellite identifier compared with time for sending of a conventional message, to indicate that the successfully sent message is a satellite message.

When a satellite signal becomes poor, the satellite message may be unsuccessfully sent. As shown in (c) in FIG. 8D(3), a heads-up notification 11 displays that the satellite signal is poor, and the message conversation interface displays that sending of the satellite message fails. Time for failed sending of the satellite message incorporates a satellite identifier compared with time for failed sending of the conventional message, to indicate that the message that is unsuccessfully sent is a satellite message.

In some embodiments, when a satellite signal becomes worse (for example, a signal of lower than 2 bars) or a satellite is disconnected, the heads-up notification 11 may be automatically expanded into a satellite connection status interface 10, so that the user adjusts a posture of a mobile phone based on prompt information in the satellite connection status interface 10. After the satellite signal restores to be good (for example, a signal of two bars or more), the satellite connection status interface 10 may automatically collapse into a form of the heads-up notification 11.

After the satellite message fails to be sent, the user may further tap or touch and hold the unsuccessfully sent satellite message, to resend the satellite message. As shown in (d) in FIG. 8D(4), if the user taps or touches and holds a previously unsuccessfully sent satellite message, a resending prompt box may pop up. The resending prompt box includes resending prompt information, a "Cancel" option, and a "Resend" option. The resending prompt information includes "Whether to resend: Suggest to send in an open and unblocked region, to improve a success rate". If the user taps the "Cancel" option, resending is not performed. If the user taps the "Resend" option, the unsuccessfully sent satellite message is resent.

In some embodiments, if the user taps the "Resend" option, and the electronic device is currently connected to a satellite, the unsuccessfully sent satellite message may be directly resent. If the user taps the "Resend" option, and the electronic device is currently disconnected from the satellite, the electronic device needs to perform satellite alignment again and resend the satellite message after being connected to the satellite.

In some embodiments, after the satellite connection status interface 10 is collapsed, in addition to being presented in the form of the heads-up notification 11, the satellite connection status interface 10 may further be presented in a form of a floating window, a dynamic capsule, or the like.

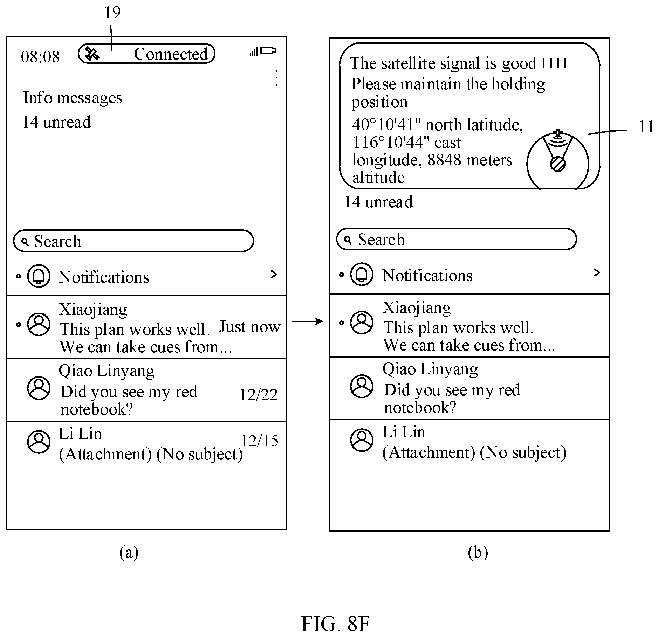

In some embodiments, the heads-up notification 11 may further support a user control operation to collapse/automatically collapse in a form of a floating window or a dynamic capsule, to reduce blocking impact on a lower layer interface to the greatest extent. For example, after 5s after a call interface is entered, the heads-up notification 11 is automatically collapsed into a floating window or a dynamic capsule (a dynamic capsule display solution of Glory company is shown in (a) in FIG. 8F).

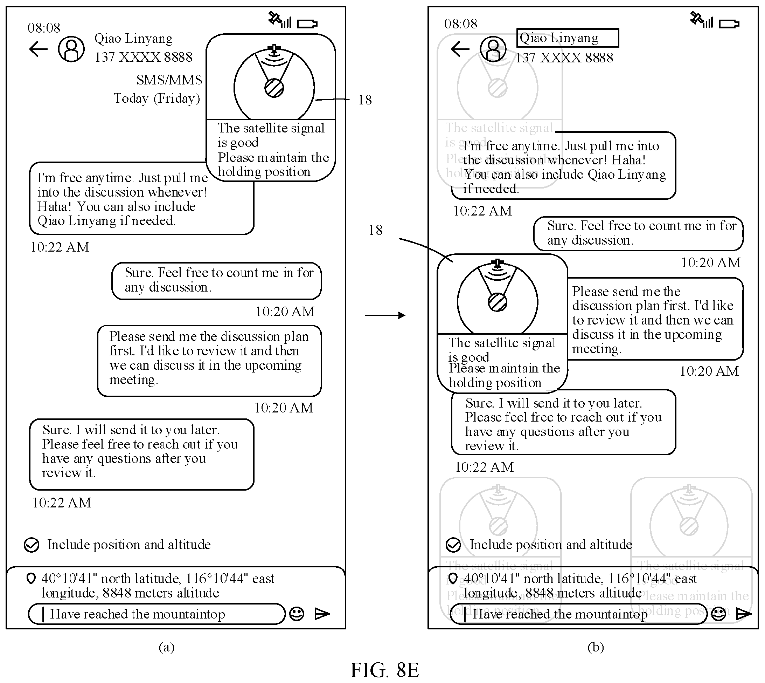

As shown in (a) in FIG. 8E, a diagram showing a display effect of a floating window 18 is shown. As shown in (b) in FIG. 8E, the floating window 18 may move to any position in a current interface with an operation (for example, a touch and hold operation) of the user.

As shown in (a) in FIG. 8F, a diagram showing a display effect of a dynamic capsule 19 is shown. Content displayed by the dynamic capsule 19 may include a satellite identifier and prompt information (for example, the prompt information may include a satellite signal state, whether the electronic device is successfully connected to the satellite, and the like). Because a display area of the dynamic capsule 19 is small, the dynamic capsule 19 may display the prompt information in a rolling display manner. As shown in (b) in FIG. 8F, an example in which the heads-up notification 11 supports being collapsed into the dynamic capsule 19 is used. When the user taps any position of the dynamic capsule 19, the dynamic capsule 19 may be expanded into the form of the heads-up notification 11.

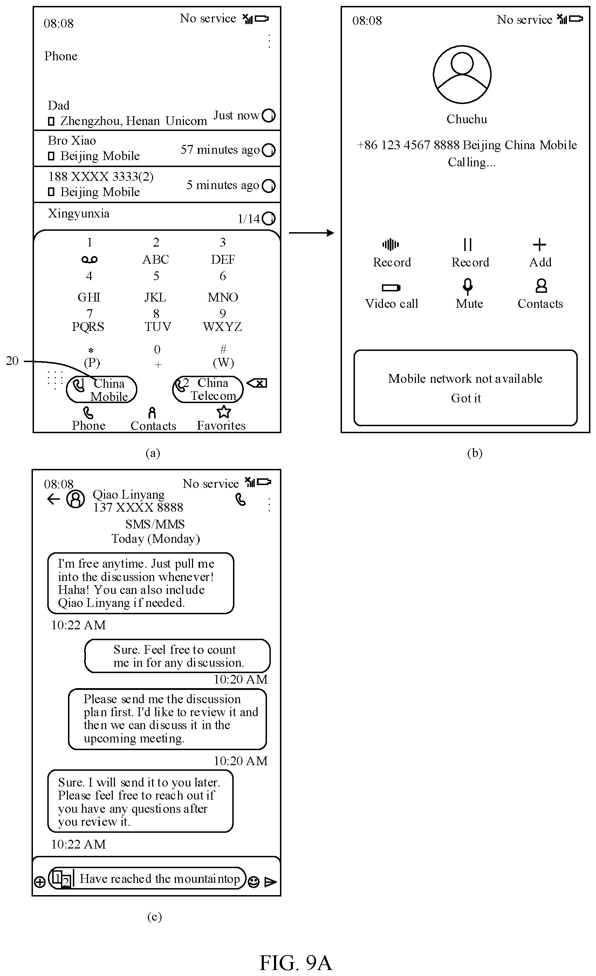

In some embodiments, an example in which the electronic device supports dual SIM dual standby (or may also support more SIM cards with the development of communication technologies) is used. If the electronic device is located in an area without an operator's mobile communication network and is not connected to a satellite, a dialer interface is shown in (a) in FIG. 9A. The dialing keypad area includes two dialer icons 20, each corresponding to a SIM card. When the user makes a call, a call interface is shown in (b) in FIG. 9A. A status bar displays "No service", and a prompt box may pop up to prompt that "Mobile network not available", and the user cannot make a call successfully. When the user sends a message, the message conversation interface is shown in (c) in FIG. 9A. The status bar displays "No service", and the user cannot successfully send the message.

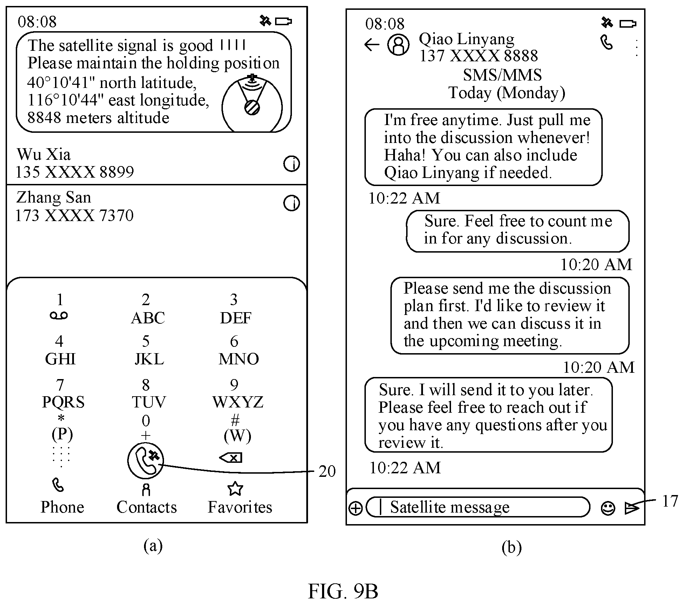

If the electronic device is located in an area without an operator's mobile communication network and is already connected to a satellite, a dialer interface may be shown in (a) in FIG. 9B. A status bar displays a satellite identifier, and a dialing keypad area displays only a dialer icon corresponding to a SIM card that can be for placing a satellite call. In this way, it is convenient for the user to initiate a satellite call, thereby avoiding placing a satellite call by using a SIM card that cannot be for placing a satellite call on the dialer interface, and improving operation efficiency of placing the satellite call.

For example, a first SIM card and a second SIM card are installed on an electronic device. The first SIM card supports a Tiantong satellite communication function, and the second SIM card does not support the Tiantong satellite communication function. Dialing is performed on a dialer interface by default by using the first SIM card, and a dialing keypad area displays only a dialer icon corresponding to the first SIM card. Compared with a solution of displaying two dialer icons, this can avoid a case in which a user cannot initiate a satellite call by tapping the other dialer icon.

If the electronic device is located in an area without an operator's mobile communication network and is connected to a satellite, a message conversation interface may be shown in (b) in FIG. 9B. A status bar displays a satellite identifier, and a user may send a satellite message on the message conversation interface shown in (b) in FIG. 9B.

In some embodiments, similarly, like the interface shown in (b) in FIG. 8C, the message conversation interface shown in (b) in FIG. 9B may display an "Include position and altitude" option.

In some embodiments, when the user is located in an area without an operator's mobile communication network, the user may not or forget to enable a satellite communication function before making a call/sending a message, and the user may be guided to enable the satellite communication function in the process of making a call/sending a message by the user, so that the user can successfully place a satellite call/send a satellite message, instead of enabling the satellite communication function in operation manners like those shown in (a), (b), and (c) in FIG. 6A, thereby reducing operation complexity of placing a satellite call/sending a satellite message, and improving use experience of the user.

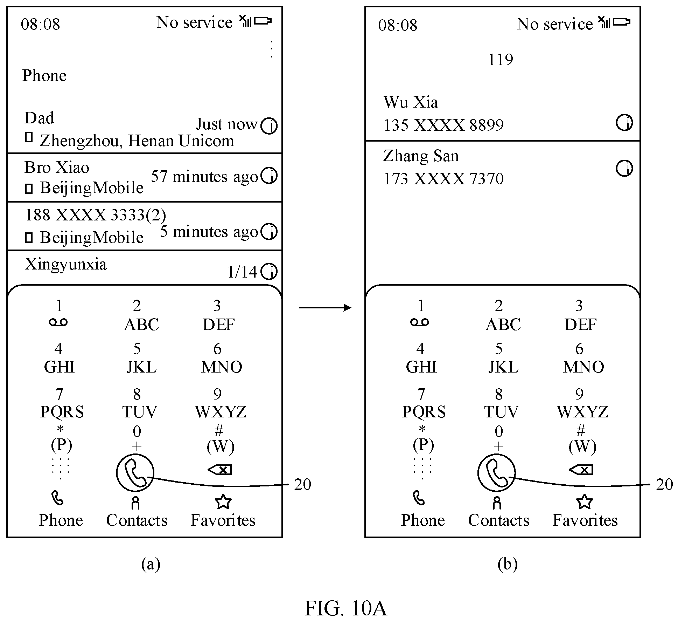

A diagram of an operation procedure of actively guiding a user to enable a satellite communication function in a process in which the user makes a call or sends a message is described in detail below with reference to FIG. 10A to FIG. 10D.

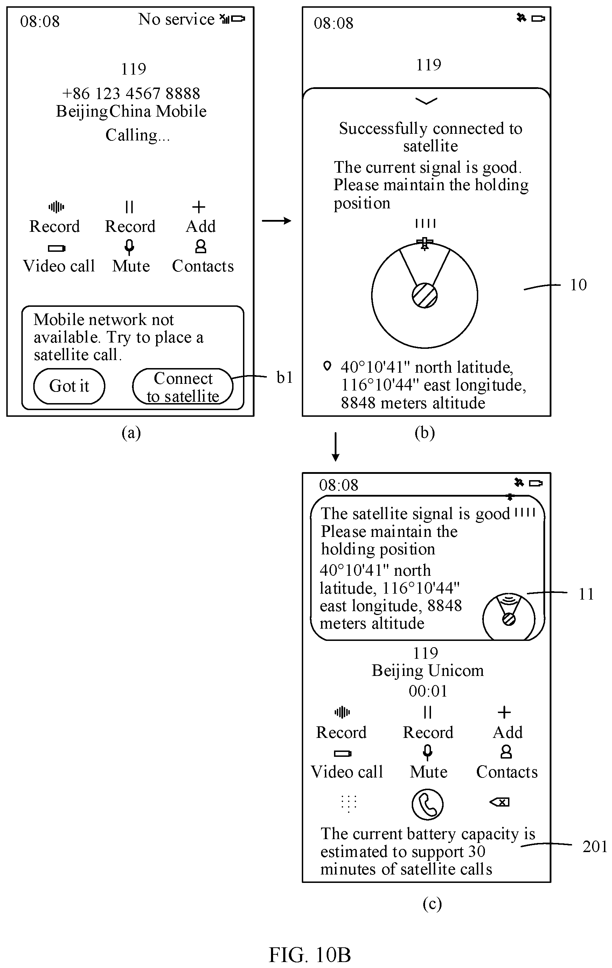

As shown in (a) in FIG. 10A, it is assumed that a user is currently in an area without an operator's mobile communication network, an electronic device is installed with only one SIM card, the user operates the electronic device to make a call, the electronic device displays a dialer interface shown in (a) in FIG. 10A, and a status bar displays "No service". When the user inputs a phone number in a dialing keypad area, the electronic device displays a dialer interface shown in (b) in FIG. 10A, and the status bar displays "No service". When the user completes inputting a phone number and taps a dialer icon, the electronic device displays a call interface shown in (a) in FIG. 10B. A status bar displays "No service", and a satellite connection guidance prompt box b1 is displayed above the call interface. The satellite connection guidance prompt box b1 may include satellite connection guidance prompt information, a "Cancel" option, and a "Connect to satellite" option. The satellite connection guidance prompt information may include "Mobile network not available. Try to place a satellite call". If the user taps the "Cancel" option, it indicates that the attempt to place a satellite call is abandoned. If the user taps the "Connect to satellite" option, after successfully connecting to a satellite, the electronic device displays a satellite connection status interface 10 shown in (b) in FIG. 0B, and displays a satellite identifier in the status bar. The satellite connection status interface 10 may be automatically collapsed into a heads-up notification 11 after preset duration (for example, after 3 seconds) after the electronic device is successfully connected to the satellite, as shown in (c) in FIG. 10B.

In some embodiments, if the user taps the "Connect to satellite" option, the satellite connection status interface 10 may be activated above the call interface shown in (a) in FIG. 10B. After satellite search, satellite alignment, and satellite connection (referring to FIG. 7A to FIG. 7D), the satellite connection status interface 10 is shown in (b) in FIG. 10B.

As shown in (c) in FIG. 10B, the electronic device may successfully make a call through the satellite communication function after being connected to a satellite.

In some embodiments, a call interface shown in (c) in FIG. 10B may further display prompt information 201 indicating satellite airtime supported by a current battery capacity, so that the user properly plans airtime, thereby improving a rescue success possibility. For example, the prompt information is "The current battery capacity is expected to support x minutes of satellite calls".

In some embodiments, estimated duration of a satellite call supported by a current remaining battery capacity may be calculated based on a current remaining battery capacity (for example, a remaining battery capacity percentage) of the electronic device and satellite airtime corresponding to a unit battery capacity (1% battery capacity). For example, a satellite call for 3 minutes is estimated to consume 1% battery capacity, and a full battery capacity is estimated to support 300 minutes of calls.

In some embodiments, the call interface may alternatively display, in different manners based on different remaining battery capacities, the prompt information 201 indicating the supported satellite airtime. For example, if the remaining battery capacity is greater than 20%, a display manner used is that the prompt information 201 indicating satellite airtime supported by a current battery capacity is displayed once after the call interface is displayed for more than a1 seconds, and the prompt information disappears after being continuously displayed for a2 seconds. Values of a1 and a2 may be set based on actual requirements. This is not limited in this embodiment of this application. For example, the value of a1 is 30, and the value of a2 is 20. For example, the remaining battery capacity of the electronic device is 80%, and the user places a satellite call to enter the call interface for more than 30 seconds. Prompt information that "The current battery capacity is estimated to support 240 minutes of satellite calls" may be displayed in a bottom area of the call interface at the 30^{th} second of entering the call interface. The prompt information disappears after being continuously displayed for 20 seconds. It may be understood that, if the remaining battery capacity of the electronic device changes from 80% to 79% in a process of continuous display of the prompt information for 20 seconds, the prompt information may be changed to "The current battery capacity is estimated to support 237 minutes of satellite calls".

If the remaining battery capacity of the electronic device is less than or equal to 20%, a display manner used is: When the call interface is entered, the prompt information 201 indicating the estimated satellite airtime supported by the current battery capacity is displayed in a flashing manner. For example, when the remaining battery capacity of the electronic device is 15%, and the user places a satellite call to enter the call interface, prompt information "The current battery capacity is estimated to support 45 minutes of satellite calls" may be displayed in a bottom area of the call interface in a continuously flashing manner. The prompt information is displayed in a continuously flashing manner until the call interface is exited. It may be understood that, if the remaining battery capacity of the electronic device changes from 15% to 14% in a process of display of the prompt information in a continuously flashing manner, the prompt information may be changed to "The current battery capacity is estimated to support 42 minutes of satellite calls".

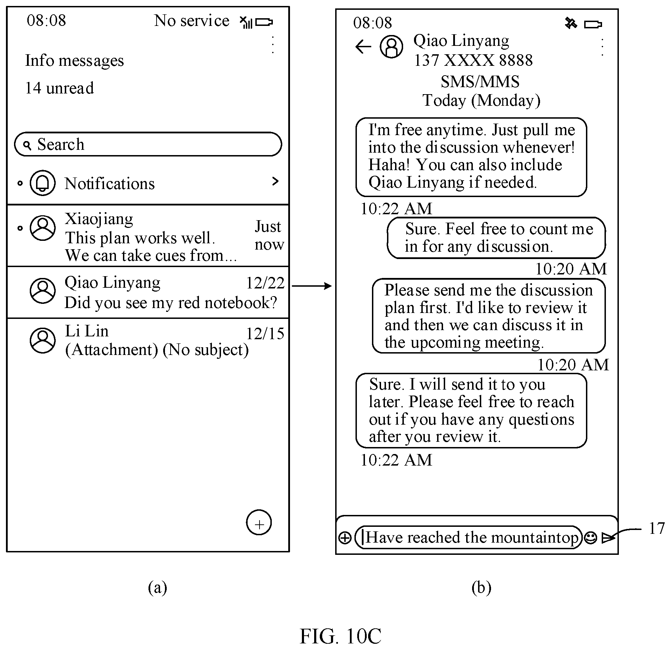

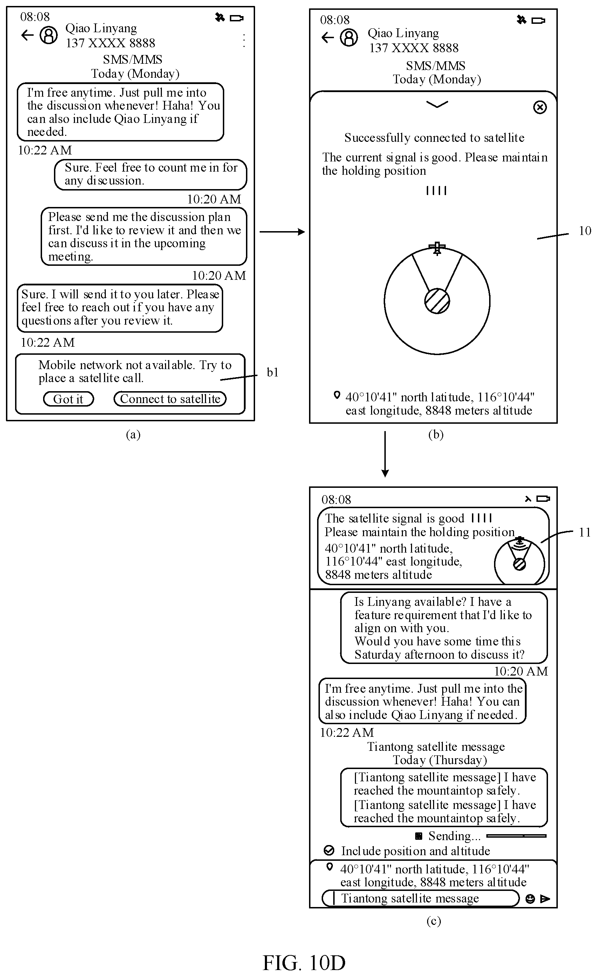

As shown in (a) in FIG. 10C, it is assumed that a user is currently in an area without an operator's mobile communication network, the user operates an electronic device to send a message, the electronic device displays a message home screen shown in (a) in FIG. 10C and a status bar displays "No service". When the user selects a receiver of themessage, the electronic device displays a message conversation interface shown in (b) in FIG. 10C, and a status bar displays "No service". When the user completes inputting message content and taps the send button 17, the electronic device displays a message conversation interface shown in (a) in FIG. 10D. A status bar displays "No service", and a satellite connection guidance prompt box b1 is displayed above the message conversation interface. The satellite connection guidance prompt box b1 may include satellite connection guidance prompt information, a "Cancel" option, and a "Connect to satellite" option. The satellite connection guidance prompt information may include "Mobile network not available. Try to send a satellite message". If the user taps the "Cancel" option, it indicates that the attempt to send a satellite message is abandoned. If the user taps the "Connect to satellite" option, after successfully connecting to a satellite, the electronic device displays a satellite connection status interface 10 shown in (b) in FIG. 10D, and displays a satellite identifier in the status bar. The satellite connection status interface 10 may be automatically collapsed into a heads-up notification 11 after preset duration (for example, after 3 seconds) after the electronic device is successfully connected to the satellite, as shown in (c) in FIG. 10D.

In some embodiments, if the user taps the "Connect to satellite" option, the satellite connection status interface 10 may be activated above the message conversation interface shown in (a) in FIG. 10D. After satellite search, satellite alignment, and satellite connection (referring to FIG. 7A to FIG. 7D), the satellite connection status interface 10 is shown in (b) in FIG. 10D.

As shown in (c) in FIG. 10D, the electronic device may successfully send an message through the satellite communication function after being connected to a satellite.

In some embodiments, there may be a case in which no operator's mobile communication network is available in an indoor environment (for example, an underground parking lot or a basement). In this case, due to blocking by buildings, an electronic device usually cannot establish a connection with a Tiantong satellite, and rescue is usually not needed in this case. Therefore, in a process in which a user makes a call or sends an message, a premise that the user is actively guided to enable a satellite communication function may alternatively be set to including it is detected that the electronic device is currently outdoors rather than indoors.

For example, the electronic device may be enabled to actively measure a global positioning system (global positioning system, GPS) signal, and determine, based on information about a plurality of measured GPS signals, that the electronic device is currently at an indoor position or an outdoor position.

For example, the electronic device may further obtain wireless network signal information, determine, based on the wireless network signal information, a wireless network signal information group to which the electronic device belongs, and then determine, based on the wireless network signal information group and a mapping relationship in a recognition model, a position corresponding to the wireless network signal information group, that is, obtain a current position of the electronic device. The wireless network signal information may include one of or any combination of the following: a timing advance (timing advance, TA), a direction of arrival (direction of arrival, DoA), and a reference signal received power (reference signal receiving power, RSRP) of a serving cell. The recognition model records (indoor or outdoor) positions of the electronic device corresponding to different wireless network signal information groups, and positions of the electronic device corresponding to a same wireless network signal information group are the same.

In some embodiments, because a satellite call or a satellite message is usually used when a user contacts the outside world in an extreme environment, and a battery capacity of an electronic device is precious, to improve a rescue success possibility of the user, when the electronic device detects that the user has connected to a satellite (has performed satellite search or satellite alignment), has sent a satellite message, or has placed a satellite call, and there is no mobile communication network currently, the electronic device may prompt, in a form of a pop-up dialog box, the user whether to enable the power saving mode, or automatically enable the power saving mode.

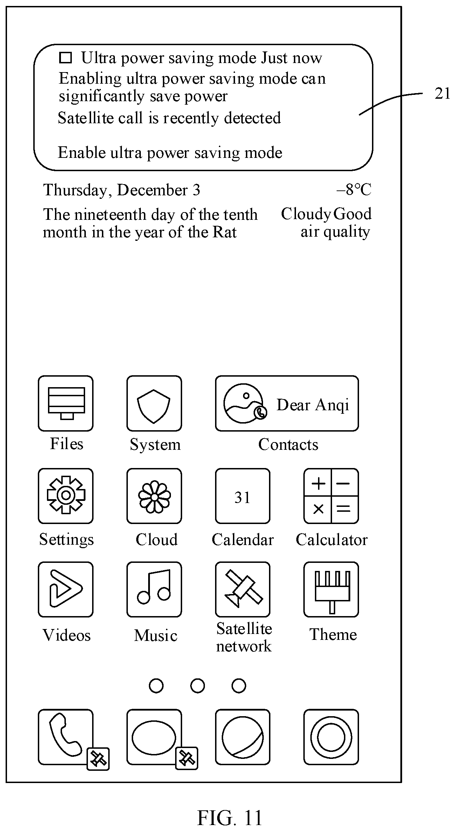

As shown in FIG. 11, when the electronic device detects that the user places a satellite call and there is no mobile communication network currently, the electronic device prompts, in a form of a pop-up dialog box, the user whether to enable an ultra power saving mode. The pop-up dialog box 21 may include prompt information for prompting the user to enable the ultra power saving mode and an "Enable ultra power saving mode" option. The prompt information may include "Enabling ultra power saving mode can significantly save power. Satellite call was recently detected". If the user taps the "Enable ultra power saving mode" option, the electronic device enables the ultra power saving mode.

In some embodiments, the electronic device may disable the previously enabled satellite communication function in a plurality of manners. For example, after the user is rescued, or an area in which the user is located is an area with a mobile communication network, the user does not need to use a satellite communication function.

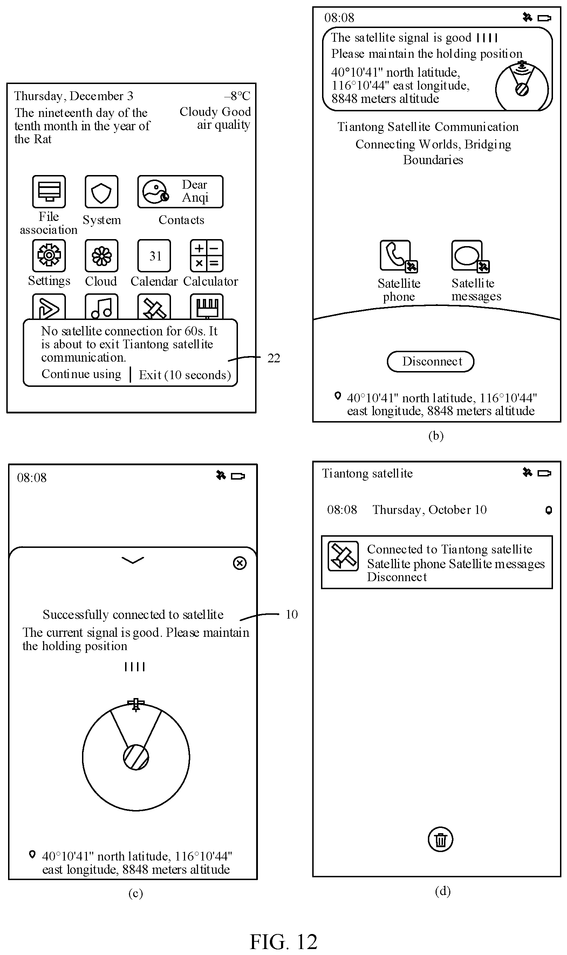

As shown in FIG. 12, an electronic device may exit a satellite communication function in four manners. As shown in (a) in FIG. 12, if duration in which the electronic device is disconnected from a satellite reaches a3 seconds, a prompt box 22 may pop up to prompt that Tiantong satellite communication is about to exit. A value of a3 may be set based on actual requirements. This is not limited in this embodiment of this application. For example, the value of a3 is 60s. The prompt box 22 may include prompt information for prompting the user that the electronic equipment is about to disable a satellite communication function, and "Continue using" and "Exit (x seconds)" options. The prompt information may include "No satellite connection for 60s. It is about to exit Tiantong satellite communication". If the user does not tap the "Continue using" option within an x-second (for example, 10s) countdown period, the electronic device automatically disables the satellite communication function. If the user taps the "Continue using" option within an x-second countdown period, the electronic device may attempt to establish a connection with the Tiantong satellite again.

As shown in (b) in FIG. 12, the user may alternatively tap a "Disconnect" control displayed on a "Satellite network" APP interface, to actively disconnect a connection between the electronic device and the Tiantong satellite, and exit Tiantong satellite communication.

As shown in (c) in FIG. 12, the user may alternatively tap an "×" option on an upper right side of a satellite connection status interface 10, to actively disconnect a connection between the electronic device and the Tiantong satellite, and exit Tiantong satellite communication.

As shown in (d) in FIG. 12, the user may alternatively tap a "Disconnect" control displayed on a notification panel, to actively disconnect a connection between the electronic device and the Tiantong satellite, and exit Tiantong satellite communication.

In some embodiments, after the electronic device establishes the connection with the Tiantong satellite, a persistent notification may be added to a notification panel on a lock screen. A display style of the notification may be shown in (d) in FIG. 12, so that the user conveniently places a satellite call, sends a satellite message, and actively disconnects the connection between the electronic device and the Tiantong satellite by using the persistent notification. A status bar on the lock screen may display a satellite identifier and a text "Tiantong satellite", so that the user learns that the electronic device is currently connected to the Tiantong satellite.

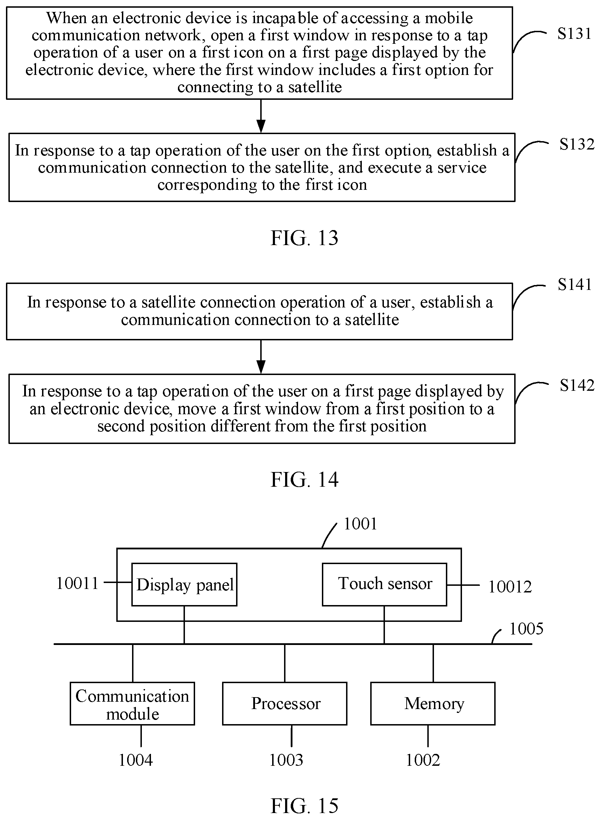

As shown in FIG. 13, an embodiment of this application provides an interface display method, applied to an electronic device. The interface display method may include the following steps.
S131: When the electronic device is incapable of accessing a mobile communication network, open a first window in response to a tap operation of a user on a first icon on a first page displayed by the electronic device, where the first window includes a first option for connecting to a satellite.
S132: In response to a tap operation of the user on the first option, establish a communication connection with the satellite, and execute a service corresponding to the first icon.

In some embodiments, the electronic device can successfully execute the service corresponding to the first icon only when the electronic device can access the mobile communication network or establishes the connection with the satellite, for example, executing the service corresponding to the first icon is making a call or sending a message. The first icon may be a dialer icon on a dialer interface or a send button in a message conversation interface. When the electronic device can access the mobile communication network, executing the service corresponding to the first icon is making a call or sending a message based on the mobile communication network. When the electronic device cannot access the mobile communication network and establishes the communication connection with the satellite, executing the service corresponding to the first icon is placing a satellite call or sending a satellite message based on the satellite.

When the electronic device cannot access the mobile communication network, the user taps the first icon on the first page, and the electronic device may open the first window used for guiding the user to connect the electronic device to the satellite (for example, a Tiantong satellite). After the user taps the first option, the electronic device may attempt to establish a communication connection with the satellite. When the electronic device successfully establishes the communication connection with the satellite, the electronic device may successfully execute the service corresponding to the first icon. As shown in (a) in FIG. 10B, the first option may be the "Connect to satellite" option.

In some embodiments, an example in which the first page is a dialer interface is used. In response to the tap operation of the user on the first icon (a dialer icon) on the dialer interface displayed by the electronic device, a call interface is displayed, and the first window is opened, where the first window overlaps a portion of the call interface. As shown in (a) in FIG. 10B, the first window may refer to a satellite connection guidance prompt box displayed above the call interface.

In some embodiments, as shown in (c) in FIG. 10B, the call interface may further display prompt information indicating estimated airtime supported by a remaining battery capacity of the electronic device.

In some embodiments, when the remaining battery capacity of the electronic device is greater than a preset battery capacity, the prompt information indicating the estimated airtime supported by the remaining battery capacity of the electronic device is displayed on the call interface in a first display manner; and when the remaining battery capacity of the electronic device is less than or equal to the preset battery capacity, the prompt information indicating the estimated airtime supported by the remaining battery capacity of the electronic device is displayed on the call interface in a second display manner different from the first display manner. The preset battery capacity may be set based on actual requirements. This is not limited in this embodiment of this application. For example, the preset battery capacity is 20%. The first display manner is that prompt information indicating estimated airtime supported by a current remaining power capacity is displayed once after the call interface is entered for more than a1seconds, and the disappears after being continuously displayed for a2 seconds. The second display manner is that prompt information indicating estimated airtime supported by a current remaining power capacity is displayed in a flashing manner when the call interface is entered. This can alert the user by using different power capacity prompts. The user may be prompted to pay attention to reserve a power capacity, thereby avoiding consuming excessive power. a1 and a2 are preset values, and may be set or modified according to an actual application.

In some embodiments, a first SIM card and a second SIM card may be installed on the electronic device. As shown in (a) in FIG. 9A, when the electronic device is not connected to a satellite or when a SIM card connected to the satellite is not set, the dialer interface includes a first dialer icon corresponding to the first SIM card and a second dialer icon corresponding to the second SIM card. As shown in (a) in FIG. 9B, when the electronic device establishes a communication connection with the satellite based on the first SIM card, the dialer interface may display only the first dialer icon corresponding to the first SIM card. Alternatively, when the electronic device establishes a communication connection with the satellite based on the second SIM card, the dialer interface may display only the second dialer icon corresponding to the second SIM card.

In some embodiments, an example in which the first page is a message conversation interface is used. In response to the tap operation of the user on the first icon (a send button on the message conversation interface) on the message conversation interface displayed by the electronic device, the first window is opened, where the first window overlaps a portion of the message conversation interface. As shown in (a) in FIG. 10D, the first window is a satellite connection guidance prompt box displayed above the message conversation interface.

In some embodiments, there may be a case in which no operator's mobile communication network is available in an indoor environment (for example, an underground parking lot or a basement). In this case, due to blocking by buildings, an electronic device usually cannot establish a connection with a Tiantong satellite, and rescue is usually not needed in this case. When detecting a case in which the electronic device is located at an outdoor position and cannot access a mobile communication network, the electronic device may open the first window in response to the tap operation performed by the user on the first icon on the first page.

In some embodiments, after executing the service corresponding to the first icon, for example, ending the satellite call or completing sending of the satellite message, the electronic device may open a second window. The second window includes a second option used for enabling a power saving mode. The electronic device may further enable the power saving mode in response to a tap operation performed by the user on the second option. As shown in FIG. 11, the second window may refer to a pop-up dialog box used for prompting the user whether to enable an ultra power saving mode, and the second option may be an "Enable ultra power saving mode" option. The electronic device may alternatively open the second window after executing the service corresponding to the first icon and when detecting that there is no mobile communication network currently, to prompt the user whether to enable the power saving mode, to save the battery capacity of the electronic device.

In some embodiments, establishing the communication connection with the satellite may include a satellite search process, a satellite alignment process, and a satellite connecting process. A third window may refer to a satellite connection status interface. That in response to a tap operation of the user on the first option, a communication connection is established with the satellite may include: A third window is opened in response to the tap operation of the user on the first option, where the third window includes an alignment pattern and an alignment area for displaying the alignment pattern. As shown in (c) in FIG. 7B, the alignment pattern may be an Earth pattern, and the alignment area may be a central circle. In response to an operation of adjusting a posture of the electronic device by the user, the alignment pattern is moved so that the alignment pattern is partially displayed in the alignment area or is entirely displayed in the alignment area. The communication connection is established with the satellite when the alignment pattern is entirely displayed in the alignment area.

In some embodiments, the operation of adjusting the posture of the electronic device by the user may include tilting the electronic device upward or downward, to implement pitch angle alignment with the satellite. The operation of adjusting the posture of the electronic device by the user may further include tilting the electronic device rightward or leftward, to implement third-dimensional angle alignment with the satellite. That in response to an operation of adjusting a posture of the electronic device by the user, the alignment pattern is moved so that the alignment pattern is partially displayed in the alignment area or is entirely displayed in the alignment area may include: In response to an operation of tilting the electronic device upward or downward by the user, the alignment pattern is controlled to move upward to be exposed in the alignment area, or the alignment pattern is controlled to move downward to disappear from the alignment area. That in response to an operation of adjusting a posture of the electronic device by the user, the alignment pattern is moved so that the alignment pattern is partially displayed in the alignment area or is entirely displayed in the alignment area may alternatively include: In response to an operation of tilting the electronic device rightward or leftward by the user, the alignment pattern is controlled to move rightward to be exposed in the alignment area, or the alignment pattern is controlled to move leftward to disappear from the alignment area.

In some embodiments, the third window may further be collapsed into a preset display form, where the preset display form is any one of a heads-up notification, a floating window, and a dynamic capsule. For example, the electronic device may collapse the third window into the preset display form in response to a swipe operation of the user on the third window, or automatically collapse the third window into the preset display form after preset duration (for example, 5s) after establishing the communication connection with the satellite, and automatically expand the third window from the preset display form into the original form (a non-collapsed display state) when disconnecting the communication connection from the satellite.

In some embodiments, if the third window in the preset display form is displayed on a second page, the electronic device may further move, in response to a tap operation of the user on the second page, the third window in the preset display form from a first position to a second position different from the first position, so that the third window in the preset display form blocks content of the second page, causing visual impact or operational impact on the user. For example, the second page is a dialer interface. Before dialing, the dialer interface does not display a number display area, and the third window in the preset display form is usually located in an upper half area (the first position) of the dialer interface. When the user dials in the dialing keypad area, the dialer interface may display the number display area, and the number display area is also located in the upper half area of the dialer interface. In this case, the third window in the preset display form blocks the number display area, and consequently, the user cannot clearly see content of the number display area. The third window in the preset display form may be moved from the first position to the second position. The second position may refer to an area between the dialing keypad area and the number display area. Further, the third window in the preset display form may be prevented from blocking the dialing keypad area and the number display area.

As shown in FIG. 14, an embodiment of this application provides an interface display method, applied to an electronic device. The interface display method may include the following steps.

S141: In response to a satellite connection operation of a user, establish a communication connection with a satellite.

For example, the satellite connection operation may include some operations shown in FIG. 6A to FIG. 6E, so that the electronic device establishes the communication connection with the satellite.

S142: In response to a tap operation of the user on a first page displayed by the electronic device, move a first window from a first position to a second position different from the first position.

The first window is for displaying a status of a connection between the electronic device and the satellite, the first window overlaps a portion of the first page, the first window is displayed on the first page in a preset display form, and the preset display form is any one of a heads-up notification, a floating window, and a dynamic capsule. The electronic device may move the first window from the first position to the second position in response to the tap operation of the user on the first page, to reduce visual impact or operational impact on the user caused by blocking content of the first page by the first window in the preset display form.

FIG. 15 is a schematic structural diagram of an interface display apparatus according to an embodiment of this application. As shown in FIG. 15, the interface display apparatus may include a display 1001, a memory 1002, a processor 1003, and a communication module 1004. The foregoing components may be connected by using one or more communication buses 1005. The display 1001 may include a display panel 10011 and a touch sensor 10012, where the display panel 10011 is configured to display an image, and the touch sensor 10012 may pass a detected touch operation to an application processor to determine a touch event type, and provide a visual output related to the touch operation through the display panel 10011. The processor 1003 may include one or more processing units. For example, the processor 1003 may include an application processor, a modem processor, a graphic processing unit, an image signal processor, a controller, a video codec, a digital signal processor, a baseband processor, a neural network processor, and/or the like. Different processing units may be independent components, or may be integrated into one or more processors. The memory 1002 is coupled to the processor 1003, and is configured to store various software programs and/or computer instructions. The memory 1002 may include a volatile memory and/or a non-volatile memory. When the processor executes the computer instructions, an electronic device can perform various functions or steps in the foregoing method embodiments.

An embodiment of this application further provides a computer storage medium. The computer storage medium stores computer instructions. When the computer instructions are run on an electronic device 100, the electronic device 100 is enabled to perform the foregoing related method steps to implement the interface display method in the foregoing embodiments.

In addition, an embodiment of this application further provides a computer program product. When the computer program product runs on an electronic device, the electronic device is enabled to perform the foregoing related method steps to implement the interface display method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the chip performs the interface display method in the foregoing method embodiments.

The computer storage medium, the computer program product, or the chip provided in embodiments of this application is configured to perform the corresponding methods provided above. Therefore, for beneficial effects that can be achieved, refer to the beneficial effects in the corresponding methods provided above. Details are not described herein again.

Based on the foregoing descriptions of the implementations, a person skilled in the art may clearly understand that for convenience and ease of description, division into the foregoing function modules is merely used as an example for illustration. In actual application, the foregoing functions can be allocated to and implemented by different function modules based on needs. To be specific, an inner structure of an apparatus is divided into different function modules to implement all or some of the functions described above.

In the several embodiments provided in this application, it should be understood that the disclosed apparatus and method may be implemented in other manners. For example, the described apparatus embodiment is an example. For example, the module or division into the units is logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, to be specific, may be located in one place, or may be distributed in a plurality of different places. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit. The integrated unit may be implemented in a form of hardware, or may be implemented in a form of a software function unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any change or replacement made within the technical scope disclosed in this application shall fall within the protection scope of this application.

## Claims

1. An interface display method, applied to an electronic device, wherein the method comprises:
displaying, when the electronic device is incapable of accessing a mobile communication network, a first window in response to a tap operation of a user on a first icon on a first page displayed by the electronic device, wherein the first window comprises a first option for connecting to a satellite; and
in response to a tap operation of the user on the first option, establishing a communication connection with the satellite, and executing a service corresponding to the first icon.

2. The interface display method according to claim 1, wherein the first page is a dialer interface, and the displaying a first window in response to a tap operation of a user on a first icon on a first page displayed by the electronic device comprises:
in response to the tap operation of the user on the first icon on the dialer interface displayed by the electronic device, displaying a call interface, and displaying the first window, wherein the first window overlaps a portion of the call interface.

3. The interface display method according to claim 2, wherein the call interface displays prompt information indicating estimated airtime based on a remaining battery capacity of the electronic device.

4. The interface display method according to claim 3, wherein when the remaining battery capacity of the electronic device is greater than a preset battery capacity, the prompt information indicating the estimated airtime based on the remaining battery capacity of the electronic device is displayed on the call interface in a first display manner; and when the remaining battery capacity of the electronic device is less than or equal to the preset battery capacity, the prompt information indicating the estimated airtime based on the remaining battery capacity of the electronic device is displayed on the call interface in a second display manner different from the first display manner.

5. The interface display method according to claim 2, wherein a first SIM card and a second SIM card are installed on the electronic device, and the dialer interface comprises a first dialer icon corresponding to the first SIM card and a second dialer icon corresponding to the second SIM card; when the electronic device establishes a communication connection with the satellite based on the first SIM card and re-enters the dialer interface, the dialer interface displays the first dialer icon and does not display the second dialer icon; and when the electronic device establishes a communication connection with the satellite based on the second SIM card and re-enters the dialer interface, the dialer interface displays the second dialer icon and does not display the first dialer icon.

6. The interface display method according to claim 1, wherein the first page is an message conversation interface, and the displaying a first window in response to a tap operation of a user on a first icon on a first page displayed by the electronic device comprises:
displaying, in response to the tap operation of the user on the first icon on the message conversation interface displayed by the electronic device, the first window, wherein the first window overlaps a portion of the message conversation interface.

7. The interface display method according to any one of claims 1 to 6, wherein the displaying, when the electronic device is incapable of accessing a mobile communication network, a first window in response to a tap operation of a user on a first icon on a first page displayed by the electronic device comprises:
displaying, when the electronic device detects that the electronic device is located at an outdoor position and is incapable of accessing the mobile communication network, the first window in response to the tap operation of the user on the first icon on the first page displayed by the electronic device.

8. The interface display method according to any one of claims 1 to 6, wherein after the executing a service corresponding to the first icon, the method further comprises:
displaying a second window, wherein the second window comprises a second option for enabling a power saving mode; and
enabling the power saving mode in response to a tap operation of the user on the second option.

9. The interface display method according to any one of claims 1 to 6, wherein the establishing a communication connection with the satellite in response to a tap operation of the user on the first option comprises:
displaying a third window in response to the tap operation of the user on the first option, wherein the third window comprises an alignment pattern and an alignment area for displaying the alignment pattern;
moving, in response to an operation of adjusting a posture of the electronic device by the user, the alignment pattern so that the alignment pattern is partially displayed in the alignment area or is entirely displayed in the alignment area; and
establishing the communication connection with the satellite when the alignment pattern is entirely displayed in the alignment area.

10. The interface display method according to claim 9, wherein the moving, in response to an operation of adjusting a posture of the electronic device by the user, the alignment pattern so that the alignment pattern is partially displayed in the alignment area or is entirely displayed in the alignment area comprises:
n response to an operation of tilting the electronic device upward by the user, controlling the alignment pattern to move upward to be exposed in the alignment area, or controlling the alignment pattern to move downward to disappear from the alignment area; or
in response to an operation of tilting the electronic device downward by the user, controlling the alignment pattern to move upward to be exposed in the alignment area, or controlling the alignment pattern to move downward to disappear from the alignment area; or
in response to an operation of tilting the electronic device rightward by the user, controlling the alignment pattern to move rightward to be exposed in the alignment area, or controlling the alignment pattern to move leftward to disappear from the alignment area; or
in response to an operation of tilting the electronic device leftward by the user, controlling the alignment pattern to move rightward to be exposed in the alignment area, or controlling the alignment pattern to move leftward to disappear from the alignment area.

11. The interface display method according to claim 9, wherein the method further comprises:
collapsing the third window into a preset display form in response to a swipe operation of the user on the third window, wherein the preset display form is any one of a heads-up notification, a floating window, and a dynamic capsule; or
collapsing the third window into a preset display form after preset duration of establishing the communication connection with the satellite, wherein the preset display form is any one of a heads-up notification, a floating window, and a dynamic capsule.

12. The interface display method according to claim 11, wherein the third window overlaps a portion of a second page, and the method further comprises:
moving, in response to a tap operation of the user on the second page, the third window that is collapsed into the preset display form from a first position to a second position different from the first position.

13. An interface display method, applied to an electronic device, wherein the method comprises:
moving, in response to a tap operation of a user on a first page displayed by the electronic device, a first window from a first position to a second position different from the first position, wherein the first window is for displaying a status of a connection between the electronic device and a satellite, the first window overlaps a portion of the first page, the first window is displayed on the first page in a preset display form, and the preset display form is any one of a heads-up notification, a floating window, and a dynamic capsule.

14. The interface display method according to claim 13, wherein a first SIM card and a second SIM card are installed on the electronic device, and the first page is a dialer interface; when the electronic device does not establish a communication connection with the satellite, the dialer interface comprises a first dialer icon corresponding to the first SIM card and a second dialer icon corresponding to the second SIM card; when the electronic device establishes a communication connection with the satellite based on the first SIM card, the dialer interface displays only the first dialer icon corresponding to the first SIM card; and when the electronic device establishes a communication connection with the satellite based on the second SIM card, the dialer interface displays only the second dialer icon corresponding to the second SIM card.

15. The interface display method according to claim 13, wherein the first page is a dialer interface, and the moving, in response to a tap operation of a user on a first page displayed by the electronic device, a first window from a first position to a second position different from the first position comprises:
moving the first window from the first position to the second position in response to a tap operation of the user on a dialing keypad area on the dialer interface, wherein the first position is in a number display area on the dialer interface, and the second position is in an area between the number display area and the dialing keypad area on the dialer interface.

16. The interface display method according to claim 15, wherein the dialing keypad area comprises a dialer icon, and the method further comprises:
displaying a call interface in response to a tap operation of the user on the dialer icon, wherein the call interface displays prompt information indicating estimated airtime based on a remaining battery capacity of the electronic device.

17. The interface display method according to claim 16, wherein the method further comprises:
displaying a second window when a call ends, wherein the second window comprises an option for enabling a power saving mode; and
enabling the power saving mode in response to a tap operation of the user on the option.

18. The interface display method according to any one of claims 13 to 17, wherein before the moving, in response to a tap operation of a user on a first page displayed by the electronic device, a first window from a first position to a second position different from the first position, the method further comprises:
when an alignment pattern and an alignment area for displaying the alignment pattern are displayed on the first window, moving, in response to an operation of adjusting a posture of the electronic device by the user, the alignment pattern so that the alignment pattern is partially displayed in the alignment area or is entirely displayed in the alignment area; and
establishing the communication connection with the satellite when the alignment pattern is entirely displayed in the alignment area.

19. A computer-readable storage medium, comprising computer instructions, wherein when the computer instructions are run on a processor, an electronic device is enabled to perform the interface display method according to any one of claims 1 to 12 or the interface display method according to any one of claims 13 to 18.

20. An electronic device, wherein the electronic device comprises a processor and a memory, the memory is configured to store instructions, and the processor is configured to invoke the instructions in the memory, so that the electronic device performs the interface display method according to any one of claims 1 to 12 or the interface display method according to any one of claims 13 to 18.
